(19) Europäisches Patentamt
European Patent Office
Office européen des brevets

(11) **EP 4 661 517 A1**

(12) **EUROPEAN PATENT APPLICATION**
published in accordance with Art. 153(4) EPC

(43) Date of publication:
**10.12.2025 Bulletin 2025/50**

(21) Application number: **24763248.2**

(22) Date of filing: **01.03.2024**

(51) International Patent Classification (IPC):
***H04W 52/18*** (2009.01)

(52) Cooperative Patent Classification (CPC):
**H04W 52/18**

(86) International application number:
**PCT/CN2024/079554**

(87) International publication number:
**WO 2024/179568 (06.09.2024 Gazette 2024/36)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **01.03.2023 CN 202310242364**

(71) Applicant: **Huawei Technologies Co., Ltd.
Shenzhen, Guangdong 518129 (CN)**

(72) Inventors:
• LIU, Xianda
  Shenzhen, Guangdong 518129 (CN)
• LIU, Ye
  Shenzhen, Guangdong 518129 (CN)
• WANG, Yihong
  Shenzhen, Guangdong 518129 (CN)
• LIU, Kunpeng
  Shenzhen, Guangdong 518129 (CN)

(74) Representative: **Goddar, Heinz J.
Boehmert & Boehmert
Anwaltspartnerschaft mbB
Pettenkoferstrasse 22
80336 München (DE)**

(54) **POWER CONTROL METHOD, COMMUNICATION APPARATUS AND SYSTEM**

(57) This application provides a power control method, and a communication apparatus and system. The power control method is applicable to uplink transmission. In the power control method, when a transmission mode or a power class changes, a terminal device reports the change to a network device, or reports a changed transmission mode, so that the network device learns of a channel status change in a timely manner, and properly allocates transmission power. This can improve communication performance, and further improve user experience.

FIG. 2

**Description**

This application claims priority to Chinese Patent Application No. 202310242364.X, filed with the China National Intellectual Property Administration on March 1, 2023 and entitled "POWER CONTROL METHOD, AND COMMUNICATION APPARATUS AND SYSTEM", which is incorporated herein by reference in its entirety.

**TECHNICAL FIELD**

This application relates to the communication field, and in particular, to a power control method, and a communication apparatus and system.

**BACKGROUND**

To resolve a resource waste problem in non-full power transmission, a full power transmission mode is widely studied and applied. Currently, after a terminal reports a capability to a network device, the network device allocates transmit power to a transmit antenna of the terminal based on the terminal capability, to implement full power transmission. However, a channel status may change in a data transmission process of the terminal. Currently, the network device cannot learn of the change, and the transmit power allocated to the terminal cannot meet a communication requirement. Therefore, how to enable the network device to properly allocate transmission power to the terminal to improve communication performance is an urgent problem to be resolved.

**SUMMARY**

This application provides a power control method, and a communication apparatus and system. The power control method can improve communication performance.

According to a first aspect, a power control method is provided. The method may be performed by a terminal device, or may be performed by a chip or a circuit disposed in the terminal device. This is not limited in this application.

The method includes: determining a first state, where the first state is that a power class changes or a full power transmission mode changes; and sending first information based on the first state, where the first information is used to determine a target full power transmission mode, and the target full power transmission mode is a transmission mode supported by a terminal device after the power class changes or the full power transmission mode changes.

In this method, when the power class changes or the full power transmission mode changes, a changed transmission mode is reported. In this way, a network device learns of a channel status change in a timely manner, and properly allocates transmission power. This can improve communication performance, and further improve user experience.

With reference to the first aspect, in some implementations of the first aspect, the first information is carried in a power headroom report PHR, and the PHR indicates power that remains after the terminal device completes current transmission.

It should be understood that, that the power class changes means that a power class currently supported by the terminal device for a specific band/carrier is different from a power class currently configured for the band/carrier, or is different from a power class capability reported by the terminal device for the band/carrier. That the full power transmission mode changes means that a power class currently supported by the terminal device for a specific band/carrier is different from a full power transmission mode currently configured for the band/carrier, or is different from a full power transmission mode reported by the terminal device for the band/carrier.

In this manner, the first information is carried in the PHR, so that overheads can be reduced.

It should be understood that the first information may alternatively be independently transmitted, and a transmission manner of the first information is not limited in this application.

With reference to the first aspect, in some implementations of the first aspect, the first information includes the target full power transmission mode and at least one of the following:

a maximum transmit antenna quantity of the terminal device, a maximum SRS port quantity supported by the terminal device on one channel sounding reference signal SRS resource, a maximum stream quantity of uplink transmission supported by the terminal device, current power class information, a maximum coherent capability of uplink transmission supported by the terminal device, an SRS port combination supported by the terminal device, or a TMPI or a TPMI group number used to support full power.

Items such as the maximum transmit antenna quantity of the terminal device, the maximum SRS port quantity supported by the terminal device on one channel sounding reference signal SRS resource, the maximum stream quantity of uplink transmission supported by the terminal device, a current power class, and the maximum coherent capability of uplink transmission supported by the terminal device need to be reported in each transmission mode, for example, a full power transmission mode 0, a full power transmission mode 1, and a full power transmission mode 2. When the changed transmission mode is the full power transmission mode 2, the SRS port combination supported by the terminal device or the TMPI or the TPMI group number used to support full power further needs to be reported.

Optionally, the target full power transmission mode is determined based on the maximum transmit antenna quantity of the terminal device and/or the maximum coherent capability of uplink transmission supported by the terminal device.

In this manner, parameters reported by the terminal device to the network device may enable the network device to optimize transmission of different ports in all transmission modes, to further improve communication performance.

With reference to the first aspect, in some implementations of the first aspect, the PHR is triggered based on at least one of the following:

a full power mode capability of at least one activated serving cell changes; and
a power class of at least one activated serving cell changes, and the at least one activated serving cell is a serving cell corresponding to the terminal device.

In other words, PHR reporting has a trigger condition. It should be understood that the trigger condition herein is merely used as an example.

With reference to the first aspect, in some implementations of the first aspect, the first information indicates a current power class, and the method further includes: sending third information, where the third information indicates a full power transmission mode corresponding to at least one candidate power class, the current power class belongs to the at least one candidate power class, and the at least one candidate power class is determined based on a maximum power class corresponding to a first band.

In this manner, transmission modes respectively corresponding to a plurality of power classes are reported in the third information, the current power class is indicated based on the first information, and a current transmission mode is jointly indicated by the first information and the third information. This improves flexibility of reporting the changed transmission mode by the terminal device.

With reference to the first aspect, in some implementations of the first aspect, the third information includes the full power transmission mode corresponding to the at least one candidate power class and at least one of the following: a maximum transmit antenna quantity of the terminal device at each of the at least one candidate power class, a maximum SRS port quantity supported by the terminal device on one SRS resource at each of the at least one candidate power class, a maximum stream quantity supported by the terminal device at each of the at least one candidate power class, and a maximum coherent capability of uplink transmission supported by the terminal device at each of the at least one candidate power class, each of the at least one candidate power class, an SRS port combination supported by the terminal device at each of the at least one candidate power class, or a transmit precoding matrix TMPI or a TPMI group number used to support full power at each of the at least one candidate power class.

According to a second aspect, a power control method is provided. The method may be performed by a network device, or may be performed by a chip or a circuit disposed in the network device. This is not limited in this application.

With reference to the second aspect, in some implementations of the second aspect, first information is received; and a target full power transmission mode is determined based on the first information, where the target full power transmission mode is a transmission mode supported by a terminal device after a power class changes or a full power transmission mode changes, and the target full power transmission mode is used for data transmission.

With reference to the second aspect, in some implementations of the second aspect, the first information is carried in a power headroom report PHR, and the PHR indicates power that remains after the terminal device completes current transmission.

With reference to the second aspect, in some implementations of the second aspect, the first information includes the target full power transmission mode and at least one of the following:
a maximum transmit antenna quantity of the terminal device, a maximum SRS port quantity supported by the terminal device on one SRS resource, a maximum stream quantity of uplink transmission supported by the terminal device, a current power class, a maximum coherent capability of uplink transmission supported by the terminal device, an SRS port combination supported by the terminal device, or a TMPI or a TPMI group number used to support full power.

With reference to the second aspect, in some implementations of the second aspect, the PHR is triggered based on at least one of the following:

a full power mode capability of at least one activated serving cell changes; and
a power class of at least one activated serving cell changes, and the at least one activated serving cell is a serving cell corresponding to the terminal device.

With reference to the second aspect, in some implementations of the second aspect, the first information indicates a current power class, and the method further includes:

receiving third information, where the third information indicates a full power transmission mode corresponding to at least one candidate power class, the current power class belongs to the at least one candidate power class, and the at least one candidate power class is determined based on a maximum power class corresponding to a first band/-carrier/band combination/carrier combination; and
determining the target full power transmission mode based on the first information and the third information.

It should be understood that the candidate power class is determined based on the maximum power class. Specifically, the maximum power class is a power class that can be supported on the first band/carrier/band combination/carrier combination and that is reported by the terminal device. The candidate power class may be another power class lower than the maximum power class.

With reference to the second aspect, in some implementations of the second aspect, the third information includes the full power transmission mode corresponding to the at least one candidate power class and at least one of the following:
a maximum transmit antenna quantity of the terminal device at each of the at least one candidate power class, a maximum SRS port quantity supported by the terminal device on one SRS resource at each of the at least one candidate power class, a maximum stream quantity supported by the terminal device at each of the at least one candidate power class, a maximum coherent capability of uplink transmission supported by the terminal device at each of the at least one candidate power class, each of the at least one candidate power class, an SRS port combination supported by the terminal device at each of the at least one candidate power class, or a TMPI or a TPMI group number used to support full power at each of the at least one candidate power class.

It should be understood that the second aspect is an implementation of a network side corresponding to the first aspect. Explanations, supplements, and descriptions of beneficial effects of the first aspect are also applicable to the second aspect, and details are not described again.

According to a third aspect, a communication apparatus is provided, including a processing unit and a transceiver unit. The processing unit is configured to determine a first state, where the first state is that a power class changes or a full power transmission mode changes. The transceiver unit is configured to send first information, where the first information is used to determine a target full power transmission mode, the target full power transmission mode is a transmission mode supported by a terminal device after the power class changes or the full power transmission mode changes, and the first information is sent based on the first state.

With reference to the third aspect, in some implementations of the third aspect, the first information is carried in a power headroom report PHR, and the PHR indicates power that remains after the terminal device completes current transmission.

With reference to the third aspect, in some implementations of the third aspect, the first information includes the target full power transmission mode and at least one of the following:
a maximum transmit antenna quantity of the terminal device, a maximum SRS port quantity supported by the terminal device on one SRS resource, a maximum stream quantity of uplink transmission supported by the terminal device, a current power class, a maximum coherent capability of uplink transmission supported by the terminal device, an SRS port combination supported by the terminal device, or a TMPI or a TPMI group number used to support full power.

With reference to the third aspect, in some implementations of the third aspect, the PHR is triggered based on at least one of the following:

a full power mode capability of at least one activated serving cell changes; and
a power class of at least one activated serving cell changes, and the at least one activated serving cell is a serving cell corresponding to the terminal device.

With reference to the third aspect, in some implementations of the third aspect, the first information indicates the current power class, and the method further includes:
sending third information, where the third information indicates a full power transmission mode corresponding to at least one candidate power class, the current power class belongs to the at least one candidate power class, and the at least one candidate power class is determined based on a maximum power class corresponding to a first band.

With reference to the third aspect, in some implementations of the third aspect, the third information includes the full power transmission mode corresponding to the at least one candidate power class and at least one of the following:
a maximum transmit antenna quantity of the terminal device at each of the at least one candidate power class, a maximum SRS port quantity supported by the terminal device on one SRS resource at each of the at least one candidate power class, a maximum stream quantity supported by the terminal device at each of the at least one candidate power class, a maximum coherent capability of uplink transmission supported by the terminal device at each of the at least one candidate power class, each of the at least one candidate power class, an SRS port combination supported by the terminal device at each of the at least one candidate power class, or a TMPI or a TPMI group number used to support full power at each of the at least one candidate power class.

According to a fourth aspect, a communication apparatus is provided, including a processing unit and a transceiver unit. The transceiver unit is configured to receive first information. The processing unit is configured to determine a target full power transmission mode based on the first information, where the target full power transmission mode is a transmission mode supported by a terminal device after a power class changes or a full power transmission mode changes, and the target full power transmission mode is used for data transmission.

With reference to the fourth aspect, in some implementations of the fourth aspect, the first information is carried in a PHR, and the PHR indicates power that remains after the terminal device completes current transmission.

With reference to the fourth aspect, in some implementations of the fourth aspect, the first information includes the target full power transmission mode and at least one of the following:
a maximum transmit antenna quantity of the terminal device, a maximum SRS port quantity supported by the terminal device on one SRS resource, a maximum stream quantity of uplink transmission supported by the terminal device, a current power class, a maximum coherent capability of uplink transmission supported by the terminal device, an SRS port combination supported by the terminal device, or a TMPI or a TPMI group number used to support full power.

With reference to the fourth aspect, in some implementations of the fourth aspect, the PHR is triggered based on at least one of the following:

a full power mode capability of at least one activated serving cell changes; and
a power class of at least one activated serving cell changes, and the at least one activated serving cell is a serving cell corresponding to the terminal device.

With reference to the fourth aspect, in some implementations of the fourth aspect, the first information indicates the current power class.

The transceiver unit is further configured to receive third information, where the third information indicates a full power transmission mode corresponding to at least one candidate power class, the current power class belongs to the at least one candidate power class, and the at least one candidate power class is determined based on a maximum power class corresponding to a first band. The processing unit is configured to determine the target full power transmission mode based on the first information and the third information.

With reference to the fourth aspect, in some implementations of the fourth aspect, the third information includes the full power transmission mode corresponding to the at least one candidate power class and at least one of the following:
a maximum transmit antenna quantity of the terminal device at each of the at least one candidate power class, a maximum SRS port quantity supported by the terminal device on one SRS resource at each of the at least one candidate power class, a maximum stream quantity supported by the terminal device at each of the at least one candidate power class, a maximum coherent capability of uplink transmission supported by the terminal device at each of the at least one candidate power class, each of the at least one candidate power class, an SRS port combination supported by the terminal device at each of the at least one candidate power class, or a TMPI or a TPMI group number used to support full power at each of the at least one candidate power class.

It should be understood that, the third aspect and the fourth aspect are implementations of apparatus sides corresponding to the first aspect and the second aspect respectively, and explanations, supplements, and beneficial effects of the first aspect and the second aspect are also applicable to the third aspect and the fourth aspect.

According to a fifth aspect, this application provides a communication apparatus, including at least one processor. The at least one processor is coupled to at least one memory, and the at least one memory is configured to store a computer program or instructions. The at least one processor is configured to invoke the computer program or the instructions from the at least one memory and run the computer program or the instructions, to enable the communication device to perform the method according to any one of the first aspect and the second aspect and the possible implementations of the first aspect and the second aspect.

According to a sixth aspect, a processor is provided, including an input circuit, an output circuit, and a processing circuit. The processing circuit is configured to: receive a signal through the input circuit, and transmit a signal through the output circuit, so that the method according to any one of the first aspect and the second aspect and the possible implementations of the first aspect and the second aspect is implemented.

In a specific implementation process, the processor may be a chip, the input circuit may be an input pin, the output circuit may be an output pin, and the processing circuit may be a transistor, a gate circuit, a trigger, any logic circuit, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the various circuits are not limited in embodiments of this application.

According to a seventh aspect, this application provides a computer-readable storage medium. The computer-readable storage medium stores computer instructions, and when the computer instructions are run on a computer, the method according to any one of the first aspect and the second aspect and the possible implementations of the first aspect and the second aspect is performed.

According to an eighth aspect, this application provides a computer program product. The computer program product includes computer program code, and when the computer program code is run on a computer, the method according to any one of the first aspect and the second aspect and the possible implementations of the first aspect and the second aspect is performed.

According to a ninth aspect, this application provides a chip, including a processor and a communication interface. The communication interface is configured to receive a signal and transmit the signal to the processor, and the processor processes the signal, so that the method according to any one of the first aspect and the second aspect and the possible implementations of the first aspect and the second aspect is performed.

According to a tenth aspect, a communication system is provided, including the communication apparatus according to the third aspect and/or the fourth aspect.

According to an eleventh aspect, a communication method is provided. The method includes: A terminal determines a first state, where the first state is that a power class changes or a full power transmission mode changes. The terminal sends first information based on the first state, where the first information is used to determine a target full power transmission mode. A network device receives the first information, and determines the target full power transmission mode based on the first information. The target full power transmission mode is used for data transmission.

## BRIEF DESCRIPTION OF DRAWINGS

FIG. 1 is a diagram of a network architecture according to an embodiment of this application;
FIG. 2 is a diagram of a power control method according to an embodiment of this application;
FIG. 3 is a block diagram of a communication apparatus 300 according to this application; and
FIG. 4 is a diagram of a structure of a communication apparatus 10 according to this application.

## DESCRIPTION OF EMBODIMENTS

The following describes technical solutions of this application with reference to accompanying drawings.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunication system (universal mobile telecommunication system, UMTS), a worldwide interoperability for microwave access (worldwide interoperability for microwave access, WiMAX) communication system, a future 5th generation (5th generation, 5G) system or new radio (new radio, NR), vehicle to X (vehicle to X, V2X), a long term evolution-vehicle (long term evolution-vehicle, LTE-V) technology, an internet of vehicles, machine type communication (machine type communication, MTC), an internet of things (internet of things, IoT), a long term evolution-machine (long term evolution-machine, LTE-M) technology, a machine to machine (machine to machine, M2M) system, and the like, where V2X may include vehicle to network (vehicle to network, V2N), vehicle to vehicle (vehicle to vehicle, V2V), vehicle to infrastructure (vehicle to infrastructure, V2I), vehicle to pedestrian (vehicle to pedestrian, V2P), and the like.

The technical solutions provided in this application may be further applied to a future communication system, for example, a 6th generation mobile communication system. This is not limited in this application.

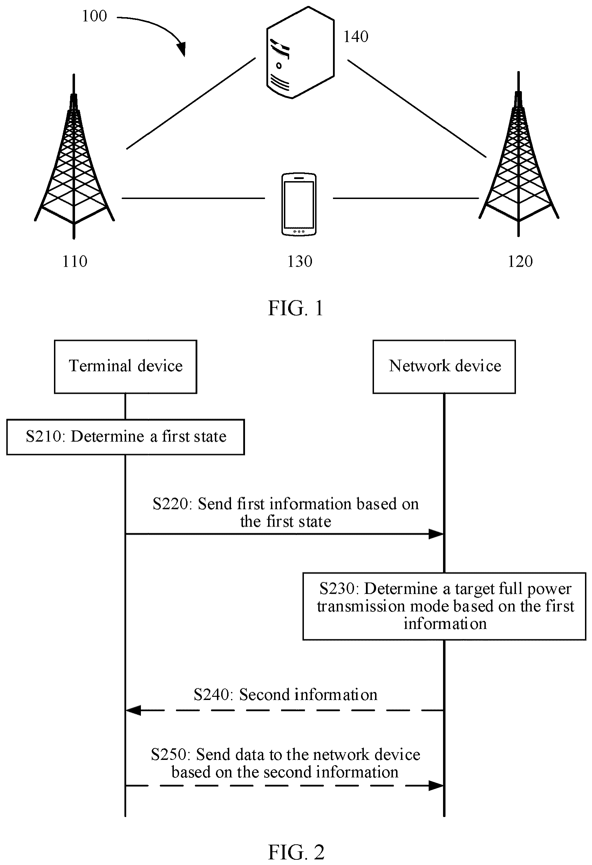

FIG. 1 is a diagram of a network architecture according to an embodiment of this application. As shown in FIG. 1, a communication system 100 may include at least one network device, for example, a network device 110 and a network device 120 shown in FIG. 1. The communication system 100 may further include at least one terminal device, for example, a terminal device 130 shown in FIG. 1. The terminal device 130 may be mobile or fixed. Both the network device 110 and the network device 120 are devices such as base stations or base station controllers that can communicate with the terminal device 130 over a radio link. Each network device may provide communication coverage for a specific geographical area, and may communicate with a terminal device located in this coverage area (cell). The wireless communication system 100 may further include at least one core network, for example, a core network 140 shown in FIG. 1. The core network 140 may be a 4G core network, a 5G core network, or the like.

A dual-link architecture may be formed between the core network 140 and the terminal device 130. For example, the network device 110 is an LTE base station serving as a primary base station, the network device 120 is an NR base station serving as a secondary base station, the core network 130 is an evolved packet core network (evolved packet core, EPC), a control plane connection and a data plane connection exist between the network device 110 and the core network 130, a data plane connection exists between the network device 120 and the core network 140, and both the network device 110 and the network device 120 provide air interface transmission resources for data transmission between the terminal device 130 and the core network 130. In other words, an EN-DC (E-UTRANR dual connectivity) dual-link deployment scenario is formed. In this case, the network device 110 corresponds to an LTE eNB, the network device 120 corresponds to a gNB, and the core network corresponds to an EPC.

It should be understood that, FIG. 1 shows an example in which there are two network devices and one terminal device. However, this should not constitute any limitation in this application. Optionally, the communication system 100 may include more network devices, and coverage of each network device may include another quantity of terminal devices. Optionally, the communication system 100 may further include a plurality of core network devices. This is not limited in embodiments of this application.

A plurality of antennas may be configured for each communication device such as the network device 110, the network device 120, or the terminal device 130 in FIG. 1. The plurality of antennas may include at least one transmit antenna configured to send a signal and at least one receive antenna configured to receive a signal. In addition, each communication device further additionally includes a transmitter chain and a receiver chain. A person of ordinary skill in the art may understand that both the transmitter chain and the receiver chain may include a plurality of components (for example, a processor, a modulator, a multiplexer, a demodulator, a demultiplexer, or an antenna) related to signal sending and receiving. Therefore, the network device may communicate with the terminal devices by using a multi-antenna technology.

Optionally, the wireless communication system 100 may further include other network entities such as a network controller and a mobility management entity. Embodiments of this application are not limited thereto.

The network device may communicate with the terminal device. The terminal device in embodiments of this application may also be referred to as user equipment (user equipment, UE), a mobile station (mobile station, MS), a mobile terminal (mobile terminal, MT), an access terminal, a subscriber unit, a subscriber station, a mobile console, a mobile station, a remote station, a remote terminal, a mobile device, a user terminal, a terminal, a wireless communication device, a user agent, a user device, or the like.

The terminal device may be a device that provides voice/data connectivity for a user, for example, a handheld device or a vehicle-mounted device that has a wireless connection function. Currently, examples of some terminal devices are a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal device in a 5G network, a terminal device in a future evolved public land mobile network (public land mobile network, PLMN), and/or any other suitable device configured to perform communication in a wireless communication system. This is not limited in embodiments of this application.

The wearable device may also be referred to as a wearable intelligent device, and is a general term of wearable devices, such as glasses, gloves, watches, clothes, and shoes, that are developed by applying wearable technologies to intelligent designs of daily wear. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that dedicated to only one type of application function and need to work with other devices such as smartphones, such as various smart bands or smart jewelry for monitoring physical signs.

In addition, the terminal device in embodiments of this application may alternatively be a terminal device in an internet of things system. IoT is an important part of future development of information technologies. A main technical feature of the IoT is connecting things to networks by using a communication technology, to implement an intelligent network for interconnection between a person and machines or between things.

In addition, in embodiments of this application, the terminal device may further include a sensor, for example, an intelligent printer, a train detector, or a gas station. Main functions of the terminal device include collecting data (by some terminal devices), receiving control information and downlink data from a network device, sending an electromagnetic wave, and transmitting uplink data to the network device.

The network device in embodiments of this application may be a device configured to communicate with a terminal device. The network device may be an evolved NodeB (evolved NodeB, eNB, or eNodeB) in an LTE system, a radio controller in a cloud radio access network (cloud radio access network, CRAN) scenario, a radio network controller (radio network controller, RNC), a base station controller (base station controller, BSC), a home base station (for example, a home evolved NodeB or a home NodeB, HNB), or a baseband unit (baseband unit, BBU). Alternatively, the network device may be a relay station, an access point, a vehicle-mounted device, a wearable device, a network device in a future 5G network, or a network device in a future evolved PLMN network, or may be an access point (access point, AP) in a wireless local area network (wireless local area network, WLAN), a wireless relay node, a wireless backhaul node, a transmission point (transmission point, TP), or a transmission reception point (transmission reception point, TRP), or may be a gNB or a transmission point (TRP or TP) in a new radio (new radio, NR) system, one antenna panel or a group of antenna panels (including a plurality of antenna panels) of a base station in a 5G system, or a network node constituting a gNB or a transmission point, for example, a baseband unit (BBU) or a distributed unit (distributed unit, DU). This is not limited in embodiment of this application.

In some deployments, a gNB may include a central unit (central unit, CU) and a DU. The gNB may further include an active antenna unit (active antenna unit, AAU for short). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in this application.

In addition, in embodiments of this application, the network device provides a service for a cell, and the terminal device communicates with the cell by using a transmission resource (for example, a frequency domain resource or a spectrum resource) allocated by the network device. The cell may belong to a macro base station (for example, a macro eNB or a macro gNB), or may belong to a base station corresponding to a small cell (small cell). The small cell herein may include a metro cell (metro cell), a micro cell (micro cell), a pico cell (pico cell), a femto cell (femto cell), and the like. The small cells are characterized by small coverage and low transmit power, and are applicable to providing a high-rate data transmission service.

In addition, in embodiments of this application, the network device may include a base station (gNB), for example, a macro base station, a micro base station, an indoor hotspot, or a relay node, and has functions of: sending a radio wave to the terminal device, to implement downlink data transmission and control uplink transmission by sending scheduling information, and receiving a radio wave sent by the terminal device, to receive uplink data transmission.

To better understand embodiments of this application, the following first describes concepts in embodiments of this application.

1. Power headroom (power headroom, PH): The power headroom has been introduced in LTE, that is, a difference between maximum transmission power allowed by a terminal and currently evaluated PUSCH transmission power, and indicates a quantity of transmission power that can be used by the terminal in addition to transmission power used for current PUSCH transmission.

The PH is in a unit of dB, and has a value range of [-23, 40] dB.

If the PH is of a negative value, it indicates that a network schedules, for the terminal, a data transmission rate higher than a data transmission rate that can be supported by current available transmit power of the terminal. One of motivations for defining the PH is that the PH may be used as a reference basis for a base station to allocate an uplink resource, and may also provide a basis for uplink power control. Specifically, how the base station uses a PH value reported by the terminal depends on an algorithm design of the base station. For example, if the PH is of a positive value, more resources are subsequently allocated to the terminal for transmission. If the PH is of a negative value, fewer resources are allocated to the terminal for transmission during next scheduling.

Because the "evaluated PUSCH transmission power" is obtained through calculation based on an actual channel instead of actual transmit power, and is not limited by maximum transmit power, the PH is of a negative value.

As described above, transmitting the PH by a communication device can avoid, to some extent, a phenomenon that maximum transmit power of the communication device is insufficient.

Alternatively, transmitting the PH by a communication device can avoid, to some extent, a phenomenon that maximum transmit power of the communication device has a surplus.

2. Power headroom report (power headroom report, PHR): The power headroom report is a process in which a terminal device reports power headroom to a network side. The process may be specifically divided into reporting triggering, PH calculation, and reporting. Different types of PHRs may be used for different channels. For example, a type 1 PHR (type 1 PHR) may be mainly used for a PUSCH channel, a type 2 PHR (type 2 PHR) may be mainly used for a PUSCH or a physical uplink control channel (physical uplink control channel, PUCCH) in a multi-connection (multiple radio dual connection, MRDC) scenario, and a type 3 PHR may be mainly used for a sounding reference signal (sounding reference signal, SRS).

In this application, the type 1 PHR is used as an example for description.

3. Bandwidth part (bandwidth part, BWP):

A concept of the bandwidth part is introduced in new radio (new radio, NR), and each cell may include a plurality of BWPs. However, at a same moment, one communication device can activate and use only one BWP in each cell.

Currently, only one BWP can be activated in one cell. Therefore, reporting is still performed based on a cell (one PH value is reported in each cell) when the communication device transmits a PHR. However, if a plurality of BWPs are activated in one cell, a solution of reporting based on a BWP granularity needs to be considered when the communication device transmits the PHR.

4. Sounding reference signal (Sounding Reference Signal, SRS) port: Each SRS resource includes $N_{\mathrm{ap}}^{\mathrm{SRS}} \in \{1,2,4,8\}$ SRS ports. For an SRS used for DL channel measurement, a base station needs to obtain channel information of each terminal receive antenna. Therefore, each SRS port corresponds to one terminal receive antenna. There are two terminal forms. For a terminal with nTnR (that is, quantities of transmit and receive links are the same), one SRS resource is usually configured, including n SRS ports, and each SRS port corresponds to each terminal receive/-transmit antenna. For a terminal with nTmR (that is, quantities of transmit and receive links are different), m/n SRS resources are usually configured, each SRS resource includes n SRS ports, and the m/n SRS resources may correspond to m terminal receive antennas.

Before uplink transmission, the terminal reports a quantity of transmit antennas (for example, 1Tx, 2Tx, or 4Tx) that can be supported by the terminal. The base station may configure a quantity of SRS ports based on the quantity of transmit antennas. Each transmit antenna corresponds to one SRS port. The base station receives and measures an SRS to determine uplink channel information of each terminal transmit antenna. Further, the base station indicates transmit precoding of a PUSCH based on an SRS port. A row of a transmit precoding matrix is sequentially corresponding to each SRS port, and represents a transmit phase of a transmit antenna corresponding to the SRS port, and a column of the transmit precoding matrix is a quantity of streams.

It should be understood that the base station in this application is an example of a network device.

5. Coherent capability: The coherent capability is related to a quantity of antennas of a terminal, as shown in the following.

For a 2Tx terminal:

Type 1: A full-coherent (full-coherent) capability indicates that for all transmit antennas of the terminal, phase calibration is completed and phase weighting may be performed, in other words, all terminal antennas may send a same data layer. A corresponding transmit precoding matrix (which may also be referred to as a precoding matrix for short) is further related to a quantity of transmission layers (rank). For example, a corresponding transmit precoding matrix is shown in a transmit precoding matrix indicator (transmit precoding matrix indicator, TPMI) index value 2 to a transmit precoding matrix indicator index value 5 in Table 1, or is shown in a TPMI index value 1 and a TPMI index value 2 in Table 2.

Type 2: A non-coherent (non-coherent) capability indicates that for no transmit antennas of a terminal, phase calibration is completed and phase weighting can be performed to send a same data layer, in other words, only one antenna can be used to send data of a same layer. A corresponding transmit precoding matrix is shown in a TPMI index value 0 and a TPMI index value 1 in Table 1, or is shown in a TPMI index value 0 in Table 2.

Table 1 Precoding matrix $W$ for 1-layer transmission of 2Tx (2-port SRS resources)

| TPMI index | $W$ | | | | | | | |
|---|---|---|---|---|---|---|---|---|
| 0-5 | $\dfrac{1}{\sqrt{2}}\begin{bmatrix} 1 \\ 0 \end{bmatrix}$ | $\dfrac{1}{\sqrt{2}}\begin{bmatrix} 0 \\ 1 \end{bmatrix}$ | $\dfrac{1}{\sqrt{2}}\begin{bmatrix} 1 \\ 1 \end{bmatrix}$ | $\dfrac{1}{\sqrt{2}}\begin{bmatrix} 1 \\ -1 \end{bmatrix}$ | $\dfrac{1}{\sqrt{2}}\begin{bmatrix} 1 \\ j \end{bmatrix}$ | $\dfrac{1}{\sqrt{2}}\begin{bmatrix} 1 \\ -j \end{bmatrix}$ | - | - |

Table 2 Precoding matrix *W* for 2-layer transmission of 2Tx (2-port SRS resources)

| TPMI index | $W$ | | | |
|---|---|---|---|---|
| 0-2 | $\frac{1}{\sqrt{2}}\begin{bmatrix}1 & 0\\ 0 & 1\end{bmatrix}$ | $\frac{1}{2}\begin{bmatrix}1 & 1\\ 1 & -1\end{bmatrix}$ | $\frac{1}{2}\begin{bmatrix}1 & 1\\ j & -j\end{bmatrix}$ | - |

For a 4Tx terminal:

Type 1: A full-coherent (full-coherent) capability indicates that for all transmit antennas of a terminal, phase calibration is completed, and phase weighting may be performed, in other words, all UE antennas may send a same data layer. A corresponding transmit precoding matrix is related to a quantity of transmission layers and a waveform. For example, the precoding matrix is shown in TPMI index values 12 to 27 in Table 3 or Table 4, or TPMI index values 14 to 21 in Table 5, or TPMI index values 3 to 6 in Table 6, or TPMI index values 3 and 4 in Table 7.

Type 2: A partial-coherent (partial-coherent) capability indicates that for every pair of two transmit antennas of a terminal, phase calibration is completed and phase weighting can be performed, but for no pair of two transmit antennas of UE, phase calibration is completed and phase weighting can be performed, in other words, two calibrated UE antennas can send a same data layer. A corresponding transmit precoding matrix is shown in TPMI index values 4 to 11 in Table 3 or Table 4, or TPMI index values 6 to 13 in Table 5, or TPMI index values 1 and 2 in Table 6, or TPMI index values 1 and 2 in Table 7.

Type 3: A non-coherent (non-coherent) capability indicates that for no transmit antennas of a terminal, phase calibration is completed between all transmit antennas of a terminal, and phase weighting can be performed to send a same data layer, in other words, only one antenna can be used to send data of a same layer. A corresponding transmit precoding matrix is shown in TPMI index values 0 to 3 in Table 3 or Table 4, or TPMI index values 0 to 5 in Table 5, or a TPMI index value 0 in Table 6, or a TPMI index value 0 in Table 7.

Table 3 Precoding matrix *W* of a DFT-s-OFDM waveform for 1-layer transmission of 4Tx (4-port SRS resources)

| TPMI index | $W$ | | | | | | | |
|---|---|---|---|---|---|---|---|---|
| 0-7 | $\frac{1}{2}\begin{bmatrix}1\\0\\0\\0\end{bmatrix}$ | $\frac{1}{2}\begin{bmatrix}0\\1\\0\\0\end{bmatrix}$ | $\frac{1}{2}\begin{bmatrix}0\\0\\1\\0\end{bmatrix}$ | $\frac{1}{2}\begin{bmatrix}0\\0\\0\\1\end{bmatrix}$ | $\frac{1}{2}\begin{bmatrix}1\\0\\1\\0\end{bmatrix}$ | $\frac{1}{2}\begin{bmatrix}1\\0\\-1\\0\end{bmatrix}$ | $\frac{1}{2}\begin{bmatrix}1\\0\\j\\0\end{bmatrix}$ | $\frac{1}{2}\begin{bmatrix}1\\0\\-j\\0\end{bmatrix}$ |
| 8-15 | $\frac{1}{2}\begin{bmatrix}0\\1\\0\\1\end{bmatrix}$ | $\frac{1}{2}\begin{bmatrix}0\\1\\0\\-1\end{bmatrix}$ | $\frac{1}{2}\begin{bmatrix}0\\1\\0\\j\end{bmatrix}$ | $\frac{1}{2}\begin{bmatrix}0\\1\\0\\-j\end{bmatrix}$ | $\frac{1}{2}\begin{bmatrix}1\\1\\1\\-1\end{bmatrix}$ | $\frac{1}{2}\begin{bmatrix}1\\1\\j\\j\end{bmatrix}$ | $\frac{1}{2}\begin{bmatrix}1\\1\\-1\\1\end{bmatrix}$ | $\frac{1}{2}\begin{bmatrix}1\\1\\-j\\-j\end{bmatrix}$ |
| 16-23 | $\frac{1}{2}\begin{bmatrix}1\\j\\1\\j\end{bmatrix}$ | $\frac{1}{2}\begin{bmatrix}1\\j\\j\\1\end{bmatrix}$ | $\frac{1}{2}\begin{bmatrix}1\\j\\-1\\-j\end{bmatrix}$ | $\frac{1}{2}\begin{bmatrix}1\\j\\-j\\-1\end{bmatrix}$ | $\frac{1}{2}\begin{bmatrix}1\\-1\\1\\1\end{bmatrix}$ | $\frac{1}{2}\begin{bmatrix}1\\-1\\j\\-j\end{bmatrix}$ | $\frac{1}{2}\begin{bmatrix}1\\-1\\-1\\-1\end{bmatrix}$ | $\frac{1}{2}\begin{bmatrix}1\\-1\\-j\\j\end{bmatrix}$ |

(continued)

| TPMI index | W | | | | | | | |
|---|---|---|---|---|---|---|---|---|
| 24-27 | $\frac{1}{2}\begin{bmatrix}1\\-j\\1\\-j\end{bmatrix}$ | $\frac{1}{2}\begin{bmatrix}1\\-j\\j\\-1\end{bmatrix}$ | $\frac{1}{2}\begin{bmatrix}1\\-j\\-1\\j\end{bmatrix}$ | $\frac{1}{2}\begin{bmatrix}1\\-j\\-j\\1\end{bmatrix}$ | - | - | - | - |

Table 4 Precoding matrix $W$ of a CP-OFDM waveform for 1-layer transmission of 4Tx (4-port SRS resources)

| TPMI index | W | | | | | | | |
|---|---|---|---|---|---|---|---|---|
| 0-7 | $\frac{1}{2}\begin{bmatrix}1\\0\\0\\0\end{bmatrix}$ | $\frac{1}{2}\begin{bmatrix}0\\1\\0\\0\end{bmatrix}$ | $\frac{1}{2}\begin{bmatrix}0\\0\\1\\0\end{bmatrix}$ | $\frac{1}{2}\begin{bmatrix}0\\0\\0\\1\end{bmatrix}$ | $\frac{1}{2}\begin{bmatrix}1\\0\\1\\0\end{bmatrix}$ | $\frac{1}{2}\begin{bmatrix}1\\0\\-1\\0\end{bmatrix}$ | $\frac{1}{2}\begin{bmatrix}1\\0\\j\\0\end{bmatrix}$ | $\frac{1}{2}\begin{bmatrix}1\\0\\-j\\0\end{bmatrix}$ |
| 8-15 | $\frac{1}{2}\begin{bmatrix}0\\1\\0\\1\end{bmatrix}$ | $\frac{1}{2}\begin{bmatrix}0\\1\\0\\-1\end{bmatrix}$ | $\frac{1}{2}\begin{bmatrix}0\\1\\0\\j\end{bmatrix}$ | $\frac{1}{2}\begin{bmatrix}0\\1\\0\\-j\end{bmatrix}$ | $\frac{1}{2}\begin{bmatrix}1\\1\\1\\1\end{bmatrix}$ | $\frac{1}{2}\begin{bmatrix}1\\1\\j\\j\end{bmatrix}$ | $\frac{1}{2}\begin{bmatrix}1\\1\\-1\\-1\end{bmatrix}$ | $\frac{1}{2}\begin{bmatrix}1\\1\\-j\\-j\end{bmatrix}$ |
| 16-23 | $\frac{1}{2}\begin{bmatrix}1\\j\\1\\j\end{bmatrix}$ | $\frac{1}{2}\begin{bmatrix}1\\j\\j\\-1\end{bmatrix}$ | $\frac{1}{2}\begin{bmatrix}1\\j\\-1\\-j\end{bmatrix}$ | $\frac{1}{2}\begin{bmatrix}1\\j\\-j\\1\end{bmatrix}$ | $\frac{1}{2}\begin{bmatrix}1\\-1\\1\\-1\end{bmatrix}$ | $\frac{1}{2}\begin{bmatrix}1\\-1\\j\\-j\end{bmatrix}$ | $\frac{1}{2}\begin{bmatrix}1\\-1\\-1\\1\end{bmatrix}$ | $\frac{1}{2}\begin{bmatrix}1\\-1\\-j\\j\end{bmatrix}$ |
| 24-27 | $\frac{1}{2}\begin{bmatrix}1\\-j\\1\\-j\end{bmatrix}$ | $\frac{1}{2}\begin{bmatrix}1\\-j\\j\\1\end{bmatrix}$ | $\frac{1}{2}\begin{bmatrix}1\\-j\\-1\\j\end{bmatrix}$ | $\frac{1}{2}\begin{bmatrix}1\\-j\\-j\\-1\end{bmatrix}$ | - | - | - | - |

Table 5 Precoding matrix $W$ of a CP-OFDM waveform for 2-layer transmission of 4Tx (4-port SRS resources)

| TPMI index | W | | | |
|---|---|---|---|---|
| 0-3 | $\frac{1}{2}\begin{bmatrix}1&0\\0&1\\0&0\\0&0\end{bmatrix}$ | $\frac{1}{2}\begin{bmatrix}1&0\\0&0\\0&1\\0&0\end{bmatrix}$ | $\frac{1}{2}\begin{bmatrix}1&0\\0&0\\0&0\\0&1\end{bmatrix}$ | $\frac{1}{2}\begin{bmatrix}0&0\\1&0\\0&1\\0&0\end{bmatrix}$ |

(continued)

| TPMI index | W | | | |
|---|---|---|---|---|
| 4-7 | $\frac{1}{2}\begin{bmatrix} 0 & 0 \\ 1 & 0 \\ 0 & 0 \\ 0 & 1 \end{bmatrix}$ | $\frac{1}{2}\begin{bmatrix} 0 & 0 \\ 0 & 0 \\ 1 & 0 \\ 0 & 1 \end{bmatrix}$ | $\frac{1}{2}\begin{bmatrix} 1 & 0 \\ 0 & 1 \\ 1 & 0 \\ 0 & -j \end{bmatrix}$ | $\frac{1}{2}\begin{bmatrix} 1 & 0 \\ 0 & 1 \\ 1 & 0 \\ 0 & j \end{bmatrix}$ |
| 8-11 | $\frac{1}{2}\begin{bmatrix} 1 & 0 \\ 0 & 1 \\ -j & 0 \\ 0 & 1 \end{bmatrix}$ | $\frac{1}{2}\begin{bmatrix} 1 & 0 \\ 0 & 1 \\ -j & 0 \\ 0 & -1 \end{bmatrix}$ | $\frac{1}{2}\begin{bmatrix} 1 & 0 \\ 0 & 1 \\ -1 & 0 \\ 0 & -j \end{bmatrix}$ | $\frac{1}{2}\begin{bmatrix} 1 & 0 \\ 0 & 1 \\ -1 & 0 \\ 0 & j \end{bmatrix}$ |
| 12-15 | $\frac{1}{2}\begin{bmatrix} 1 & 0 \\ 0 & 1 \\ j & 0 \\ 0 & 1 \end{bmatrix}$ | $\frac{1}{2}\begin{bmatrix} 1 & 0 \\ 0 & 1 \\ j & 0 \\ 0 & -1 \end{bmatrix}$ | $\frac{1}{2\sqrt{2}}\begin{bmatrix} 1 & 1 \\ 1 & 1 \\ 1 & -1 \\ 1 & -1 \end{bmatrix}$ | $\frac{1}{2\sqrt{2}}\begin{bmatrix} 1 & 1 \\ 1 & 1 \\ j & -j \\ j & -j \end{bmatrix}$ |
| 16-19 | $\frac{1}{2\sqrt{2}}\begin{bmatrix} 1 & 1 \\ j & j \\ 1 & -1 \\ j & -j \end{bmatrix}$ | $\frac{1}{2\sqrt{2}}\begin{bmatrix} 1 & 1 \\ j & j \\ j & -j \\ -1 & 1 \end{bmatrix}$ | $\frac{1}{2\sqrt{2}}\begin{bmatrix} 1 & 1 \\ -1 & -1 \\ 1 & -1 \\ -1 & 1 \end{bmatrix}$ | $\frac{1}{2\sqrt{2}}\begin{bmatrix} 1 & 1 \\ -1 & -1 \\ j & -j \\ -j & j \end{bmatrix}$ |
| 20-21 | $\frac{1}{2\sqrt{2}}\begin{bmatrix} 1 & 1 \\ -j & -j \\ 1 & -1 \\ -j & j \end{bmatrix}$ | $\frac{1}{2\sqrt{2}}\begin{bmatrix} 1 & 1 \\ -j & -j \\ j & -j \\ 1 & -1 \end{bmatrix}$ | - | - |

Table 6 Precoding matrix *W* of a CP-OFDM waveform for 3-layer transmission of 4Tx (4-port SRS resources)

| TPMI index | W | | | |
|---|---|---|---|---|
| 0-3 | $\frac{1}{2}\begin{bmatrix} 1 & 0 & 0 \\ 0 & 1 & 0 \\ 0 & 0 & 1 \\ 0 & 0 & 0 \end{bmatrix}$ | $\frac{1}{2}\begin{bmatrix} 1 & 0 & 0 \\ 0 & 1 & 0 \\ 1 & 0 & 0 \\ 0 & 0 & 1 \end{bmatrix}$ | $\frac{1}{2}\begin{bmatrix} 1 & 0 & 0 \\ 0 & 1 & 0 \\ -1 & 0 & 0 \\ 0 & 0 & 1 \end{bmatrix}$ | $\frac{1}{2\sqrt{3}}\begin{bmatrix} 1 & 1 & 1 \\ 1 & -1 & 1 \\ 1 & 1 & -1 \\ 1 & -1 & -1 \end{bmatrix}$ |
| 4-6 | $\frac{1}{2\sqrt{3}}\begin{bmatrix} 1 & 1 & 1 \\ 1 & -1 & 1 \\ j & j & -j \\ j & -j & -j \end{bmatrix}$ | $\frac{1}{2\sqrt{3}}\begin{bmatrix} 1 & 1 & 1 \\ -1 & 1 & -1 \\ 1 & 1 & -1 \\ -1 & 1 & 1 \end{bmatrix}$ | $\frac{1}{2\sqrt{3}}\begin{bmatrix} 1 & 1 & 1 \\ -1 & 1 & -1 \\ j & j & -j \\ -j & j & j \end{bmatrix}$ | - |

Table 7 Precoding matrix $W$ of a CP-OFDM waveform for 4-layer transmission of 4Tx (4-port SRS resources)

| TPMI index | $W$ | | | |
|---|---|---|---|---|
| 0-3 | $\frac{1}{2}\begin{bmatrix} 1 & 0 & 0 & 0 \\ 0 & 1 & 0 & 0 \\ 0 & 0 & 1 & 0 \\ 0 & 0 & 0 & 1 \end{bmatrix}$ | $\frac{1}{2\sqrt{2}}\begin{bmatrix} 1 & 1 & 0 & 0 \\ 0 & 0 & 1 & 1 \\ 1 & -1 & 0 & 0 \\ 0 & 0 & 1 & -1 \end{bmatrix}$ | $\frac{1}{2\sqrt{2}}\begin{bmatrix} 1 & 1 & 0 & 0 \\ 0 & 0 & 1 & 1 \\ j & -j & 0 & 0 \\ 0 & 0 & j & -j \end{bmatrix}$ | $\frac{1}{4}\begin{bmatrix} 1 & 1 & 1 & 1 \\ 1 & -1 & 1 & -1 \\ 1 & 1 & -1 & -1 \\ 1 & -1 & -1 & 1 \end{bmatrix}$ |
| 4 | $\frac{1}{4}\begin{bmatrix} 1 & 1 & 1 & 1 \\ 1 & -1 & 1 & -1 \\ j & j & -j & -j \\ j & -j & -j & j \end{bmatrix}$ | - | - | - |

6. Power class (power class, PC): The power class indicates transmit power classes of a terminal on different bands, including a class 1, a class 1.5, a class 2, a class 3, and the like. For example, for correspondences between power classes and different bands (bands), refer to Table 8.

Table 8 Correspondence between a power class and a band (band)

| NR Band | Class 1 (dBm) | Tolerance (dB) | Class 1.5 (dBm) | Tolerance (dB) | Class 2 (dBm) | Tolerance (dB) | Class 3 (dBm) | Tolerance (dB) |
|---|---|---|---|---|---|---|---|---|
| n1 | | | | | | | 23 | $\pm2$ |
| n2 | | | | | | | 23 | $\pm2$ |
| n3 | | | | | | | 23 | $\pm2$ |
| n5 | | | | | | | 23 | $\pm2$ |
| n7 | | | | | | | 23 | $\pm2$ |
| n8 | | | | | | | 23 | $\pm2$ |
| n12 | | | | | | | 23 | $\pm2$ |
| n14 | 31 | +2/-3 | | | | | 23 | $\pm2$ |
| n18 | | | | | | | 23 | $\pm2$ |
| n20 | | | | | | | 23 | $\pm2$ |
| n25 | | | | | | | 23 | $\pm2$ |
| n26 | | | | | | | 23 | $\pm2$ |
| n28 | | | | | | | 23 | +2/-2.5 |
| n30 | | | | | | | 23 | $\pm2$ |
| n34 | | | | | | | 23 | $\pm2$ |
| n38 | | | | | | | 23 | $\pm2$ |
| n39 | | | | | | | 23 | $\pm2$ |
| n40 | | | | | 26 | +2/-3 | 23 | $\pm2$ |
| n41 | | | 29 | _2/-3 | 26 | +2/-3 | 23 | $\pm2$ |
| n47 | | | | | | | 23 | $\pm2$ |
| n48 | | | | | | | 23 | +2/-3 |

(continued)

| NR Band | Class 1 (dBm) | Tolerance (dB) | Class 1.5 (dBm) | Tolerance (dB) | Class 2 (dBm) | Tolerance (dB) | Class 3 (dBm) | Tolerance (dB) |
|---|---|---|---|---|---|---|---|---|
| n50 | | | | | | | 23 | ±2 |
| n51 | | | | | | | 23 | ±2 |
| n53 | | | | | | | 23 | ±2 |
| n65 | | | | | | | 23 | ±2 |
| n66 | | | | | | | 23 | ±2 |
| n70 | | | | | | | 23 | ±2 |
| n71 | | | | | | | 23 | +2/-2.5 |
| n74 | | | | | | | 23 | ±2 |
| n77 | | | | | 26 | +2/-3 | 23 | +2/-3 |
| n78 | | | | | 26 | +2/-3 | 23 | +2/-3 |
| n79 | | | | | 26 | +2/-3 | 23 | +2/-3 |
| n80 | | | | | | | 23 | ±2 |
| n81 | | | | | | | 23 | ±2 |
| n82 | | | | | | | 23 | ±2 |
| n83 | | | | | | | 23 | ±2/-2.5 |
| n84 | | | | | | | 23 | ±2 |
| n86 | | | | | | | 23 | ±2 |
| n89 | | | | | | | 23 | ±2 |
| n91 | | | | | | | 23 | ±2 |
| n92 | | | | | | | 23 | ±2 |
| n93 | | | | | | | 23 | ±2 |
| n94 | | | | | | | 23 | ±2 |

A tolerance is a tolerance, which is equivalent to a flexibility degree for the terminal to adjust itself. ±2 indicates that a value of a power class can be ±2 based on a corresponding value of dBm.

When transmitting a PUSCH, the terminal needs to determine transmit power of the PUSCH. Actual PUSCH transmit power obtained by multiplying the PUSCH transmit power $P_{PUSCH,b,f,c}(i,j,q_d,l)$ (channel transmit power) of the terminal by a scaling factor s is equally allocated to each transmit antenna (an antenna used to transmit the PUSCH) corresponding to non-zero PUSCH transmission. In other words, $P_{PUSCH,b,f,c}(i,j,q_d,l)$ is evenly allocated to each antenna port corresponding to non-zero PUSCH transmission.

Herein, b is a bandwidth part (bandwidth part, BWP) occupied by physical uplink shared channel (physical uplink shared channel, PUSCH) transmission, f is a carrier (carrier) occupied by the PUSCH transmission, c is a serving cell (serving cell) in which the carrier is located, 1 is a power control parameter set configured by a network device by using higher layer signaling, i is a sending occasion of the PUSCH, j is a power control parameter configuration index, and $q_d$ is an index of a path loss measurement reference signal.

The scaling factor s is a ratio of a quantity of ports corresponding to non-zero PUSCH transmit power to a maximum quantity of ports supported by the terminal on one SRS resource. It should be understood that the quantity of ports corresponding to non-zero PUSCH transmit power is determined based on a TPMI indicated by a currently scheduled PUSCH.

Table 4 is used as an example. If the network device indicates that, when a TPMI index value is 0, the quantity of ports with non-zero PUSCH transmit power is 1, and the maximum quantity of ports supported by the terminal on one SRS resource is 4, the actual PUSCH transmit power is power on one antenna port, that is, 1/4 $P_{PUSCH,b,f,c}(i,j,q_d,l)$.

Table 5 is used as an example.

If the network device indicates that, when a TPMI index value is 0, a quantity of antenna ports of non-zero PUSCH transmission is 2, and a total quantity of terminal antenna ports is 4, the actual PUSCH transmit power is power on two antenna ports, that is, $1/2\ P_{\mathrm{PUSCH},b,f,c}(i,j,q_d,l)$, and power on each antenna port is $1/4\ P_{\mathrm{PUSCH},b,f,c}(i,j,q_d,l)$.

If the network device indicates that, when a TPMI index value is 7, a quantity of antenna ports of non-zero PUSCH transmission is 4, and a total quantity of terminal antenna ports is 4, the actual PUSCH transmit power is power on four antenna ports, that is $P_{\mathrm{PUSCH},b,f,c}(i,j,q_d,l)$, power on each antenna port is $1/4\ P_{\mathrm{PUSCH},b,f,c}(i,j,q_d,l)$.

In other words, the terminal may determine, based on the channel transmit power and a quantity M of antenna ports used to send uplink data, PUSCH transmit power used on each transmit port.

For example, the transmit power on each transmit port is a ratio of the channel transmit power to M. In actual uplink transmission, an actual quantity N of antenna ports used to send uplink data may be less than or equal to M, and the actual transmit power indicates a sum of transmit power of the N antenna ports actually used by the terminal to send uplink data. The actual transmit power is less than or equal to the channel transmit power. This manner may be understood as power scaling (scaling) on the channel transmit power.

7. Full power transmission: In the foregoing non-full power transmission mechanism, a problem of power underutilization exists in a non-coherent terminal and a partial-coherent terminal, and the full power transmission resolves the problem. The full power transmission is classified into the following modes:

Full power transmission mode 0 (full power mode 0): It is assumed that a PA capability of each transmit antenna reaches Pcmax. In this case, a scaling factor s of a power control mechanism is updated to $s = 1$. In this case, the channel transmit power is directly allocated to a non-zero power port without being scaled, to implement full power transmission.

Full power transmission mode 1 (full power mode 1): It is assumed that total power of PAs corresponding to all transmit antennas reaches maximum output power Pcmax, but power of a PA corresponding to no transmit antenna reaches Pcmax. In this case, a coherent codeword is introduced to non-coherent UE and partial non-coherent UE separately, and the coherent codeword indicates that full power transmission (for example, S-CDD) is implemented in a transmit diversity manner. It should be understood that, in this case, all ports are enabled for PUSCH transmission. Therefore, total transmit power may reach Pcmax. Details are as follows.

For a case of a 2Tx non-coherent terminal with 1 stream, a TPM 2 (in Table 1) is additionally supported.

For a case of a 4Tx non-coherent terminal with 1 stream, a TPM 13 (in Table 3 or Table 4) is additionally supported.

For a case of a 4Tx non-coherent terminal with 2 streams, a TPM 6 (in Table 5) is additionally supported.

For a case of a 4Tx non-coherent terminal with 3 streams, a TPM 1 (in Table 6) is additionally supported.

For a case of a 4Tx partial-coherent terminal with 1 stream, TPMs 12-15 (in Table 1) are additionally supported.

Full power transmission mode 2 (full power mode 2): It is assumed that total power of power amplifiers (Power Amplifiers, PAs) corresponding to all transmit antennas may exceed Pcmax, and PA power of only a part of the antennas reaches Pcmax, or PA power corresponding to no transmit antenna reaches Pcmax. In this case, the terminal needs to report a full power TPMI. When the TPMI is indicated, a power scaling factor $s = 1$ corresponding to a port corresponding to the TPMI is used. For another non-full power TPMI, the power scaling factor s is a ratio of a quantity of ports corresponding to non-zero PUSCH power to a quantity of SRS ports included in a current SRS resource (a plurality of SRS resources may be configured, and a quantity of ports included in the SRS resource is less than a maximum quantity of ports supported by the terminal).

The full power TPMI is described as follows.

For 2 Tx (2-port SRS): A 2-bit (bit) bitmap (bitmap) is used to indicate whether rank-1 TPMI 0 corresponding to a 1st bit is a full power codeword, and whether rank-1 TPMI 1 corresponding to a 2nd bit is a full power codeword.

For 4 Tx (4-port SRS): As shown in Table 9, a non-coherent capability is indicated by using 2 bits, and a partial-coherent capability is indicated by using 4 bits.

Table 9 TPMI indication manners in different coherent capabilities

| 4Tx, non-coherent (2 bits) | 4Tx, partial-coherent (4 bits) |
|---|---|
| G0 | G0 |
| G1 | G1 |
| G2 | G2 |
| G3 | G3 |
|  | G4 |
|  | G5 |
|  | G6 |

G0 to G6 in Table 9 are indexes of TMPI groups (groups). Specifically, for a correspondence between a TMPI group index and a precoding matrix represented by the TMPI group index, refer to Table 10.

Table 10 Correspondence between a TMPI group index and a precoding matrix

| TPMI Groups | |
|---|---|
| G0 | $\frac{1}{2}\begin{bmatrix}1\\0\\0\\0\end{bmatrix}$ |
| G1 | $\left\{\frac{1}{2}\begin{bmatrix}1\\0\\0\\0\end{bmatrix}, \frac{1}{2}\begin{bmatrix}0\\0\\1\\0\end{bmatrix}\right\}\left\{\frac{1}{2}\begin{bmatrix}1&0\\0&0\\0&1\\0&0\end{bmatrix}\right\}$ |
| G2 | $\left\{\frac{1}{2}\begin{bmatrix}1\\0\\0\\0\end{bmatrix}, \frac{1}{2}\begin{bmatrix}0\\1\\0\\0\end{bmatrix}, \frac{1}{2}\begin{bmatrix}0\\0\\1\\0\end{bmatrix}\right\} : \frac{1}{2}\begin{bmatrix}1&0\\0&0\\0&1\\0&0\end{bmatrix}, \frac{1}{2}\begin{bmatrix}1&0\\0&1\\0&0\\0&0\end{bmatrix}, \frac{1}{2}\begin{bmatrix}0&0\\1&0\\0&1\\0&0\end{bmatrix}\right\} : \frac{1}{2}\begin{bmatrix}1&0&0\\0&1&0\\0&0&1\\0&0&0\end{bmatrix}$ |
| G3 | $\left\{\frac{1}{2}\begin{bmatrix}1&0\\0&0\\0&1\\0&0\end{bmatrix}, \frac{1}{2}\begin{bmatrix}1&0\\0&1\\0&0\\0&0\end{bmatrix}, \frac{1}{2}\begin{bmatrix}0&0\\1&0\\0&1\\0&0\end{bmatrix}\right\} : \frac{1}{2}\begin{bmatrix}1&0&0\\0&1&0\\0&0&1\\0&0&0\end{bmatrix}$ |
| G4 | $\left\{\frac{1}{2}\begin{bmatrix}1\\0\\1\\0\end{bmatrix}, \frac{1}{2}\begin{bmatrix}1\\0\\-1\\0\end{bmatrix}, \frac{1}{2}\begin{bmatrix}1\\0\\j\\0\end{bmatrix}, \frac{1}{2}\begin{bmatrix}1\\0\\-j\\0\end{bmatrix}\right\} : \frac{1}{2}\begin{bmatrix}1&0\\0&0\\0&1\\0&0\end{bmatrix}$ |
| G5 | $\left\{\frac{1}{2}\begin{bmatrix}1\\0\\1\\0\end{bmatrix}, \frac{1}{2}\begin{bmatrix}1\\0\\-1\\0\end{bmatrix}, \frac{1}{2}\begin{bmatrix}1\\0\\j\\0\end{bmatrix}, \frac{1}{2}\begin{bmatrix}1\\0\\-j\\0\end{bmatrix}\right\} ; \left\{\frac{1}{2}\begin{bmatrix}1&0\\0&0\\0&1\\0&0\end{bmatrix}, \frac{1}{2}\begin{bmatrix}1&0\\0&1\\0&0\\0&0\end{bmatrix}, \frac{1}{2}\begin{bmatrix}0&0\\1&0\\0&1\\0&0\end{bmatrix}\right\} : \frac{1}{2}\begin{bmatrix}1&0&0\\0&1&0\\0&0&1\\0&0&0\end{bmatrix}$ |
| G6 | $\left\{\frac{1}{2}\begin{bmatrix}1\\0\\1\\0\end{bmatrix}, \frac{1}{2}\begin{bmatrix}1\\0\\-1\\0\end{bmatrix}, \frac{1}{2}\begin{bmatrix}1\\0\\j\\0\end{bmatrix}, \frac{1}{2}\begin{bmatrix}1\\0\\-j\\0\end{bmatrix}\right\} ; \left\{\frac{1}{2}\begin{bmatrix}0\\1\\0\\1\end{bmatrix}, \frac{1}{2}\begin{bmatrix}0\\1\\0\\-1\end{bmatrix}, \frac{1}{2}\begin{bmatrix}0\\1\\0\\j\end{bmatrix}, \frac{1}{2}\begin{bmatrix}0\\1\\0\\-j\end{bmatrix}\right\} ;$ <br><br> $\left\{\frac{1}{2}\begin{bmatrix}1&0\\0&0\\0&1\\0&0\end{bmatrix}, \frac{1}{2}\begin{bmatrix}0&0\\1&0\\0&0\\0&1\end{bmatrix}, \frac{1}{2}\begin{bmatrix}1&0\\0&1\\0&0\\0&0\end{bmatrix}, \frac{1}{2}\begin{bmatrix}1&0\\0&0\\0&0\\0&1\end{bmatrix}, \frac{1}{2}\begin{bmatrix}0&0\\1&0\\0&1\\0&0\end{bmatrix}, \frac{1}{2}\begin{bmatrix}0&0\\0&0\\0&1\\1&0\end{bmatrix}\right\} ; \frac{1}{2}\begin{bmatrix}1&0&0\\0&1&0\\0&0&1\\0&0&0\end{bmatrix}$ |

In a communication process, the terminal may further determine, based on a transmit duty cycle (DutyCycle), whether to perform power back-off. Different power classes correspond to different Pcmax values. For example, the power class 1.5 corresponds to Pcmax=29 dBm, the power class 2 corresponds to Pcmax=26 dBm, and the power class 3 corresponds to Pcmax=23 dBm. The terminal may independently determine a currently used PC based on the DutyCycle and threshold decision.

For example, when the terminal operating on the PC 1.5 band determines that the DutyCycle scheduled by the network device exceeds a capability reported by the terminal, the terminal is allowed to roll back to a PC with low power. For example, the power may back off to the PC 2 (26 dBm) or the PC 3 (23 dBm). For a 4Tx terminal or a subsequent possible 8Tx terminal, a UE Tx quantity may also be reduced during terminal power back-off, for example, reduced to 4Tx or 2Tx.

However, currently, after a terminal side reports capability information, a network side can schedule full power transmission only based on the capability information.

For example, the PC 1.5, the 4Tx, and the non-coherent terminal are used as an example. The terminal reports the full power mode 1, and the network side can schedule full power transmission only based on the mode 1. However, after the terminal side reports the capability information, a channel status may change. For example, the terminal performs power back-off, and the network side cannot learn of the change. Therefore, the network side still schedules transmission based on the capability information previously reported by the terminal, thereby reducing communication reliability.

For example, the PC 1.5, the 4Tx, and the non-coherent terminal are used as an example. The terminal reports the mode 1 in capability information, and the network side can schedule full power transmission only based on the mode 1. However, an actually available mode may change in the following different cases.

- 4*23 dBm: When the power backs off to the PC 2, the mode 0 is actually available for a 2-port SRS. When the power backs off to the PC 3, the mode 0 is actually available for a 4-port SRS.
- 4*26 dBm: When the power backs off to the PC 2, the mode 0 is actually available for a 4-port SRS.
- 2*23 dBm+2*26 dBm: When the power backs off to the PC 2, the mode 2 is actually available for a 4-port SRS, corresponding to TMPI indexes G0, G1, and G3. When the power backs off to the PC 3, the mode 0 is actually available for a 4-port SRS.

In view of this, this application provides a power control method. According to the method, a network side can obtain a current channel status in a timely manner, to improve accuracy of power scheduling, and improve communication quality.

The following describes the solution of this application by using uplink transmission as an example, that is, an example in which a receiving party and a sending party being a terminal and a network device are used as execution bodies.

As shown in FIG. 2, the method may include the following steps.

S210: A terminal device determines a first state.

The first state is that a power class changes, or a full power transmission mode changes.

A possible reason why the power class changes is that power back-off occurs on the terminal device. Alternatively, the power class may change due to another reason, for example, the power class changes based on pre-definition, pre-configuration, or configuration.

That the power class changes may be changing from a low power class to a high power class, or from a high power class to a low power class. In other words, a power class A changes to a power class B, and the power class A is different from the power class B. For example, a PC 1 changes to a PC 3, or a PC 2 may change to the PC 1. It should be understood that specific values of the foregoing classes and the changes thereof are merely used as an example rather than a limitation.

That the power class changes may cause the full power transmission mode to change.

The full power transmission mode also changes for another reason, for example, the full power transmission mode changes based on pre-definition, pre-configuration, or configuration.

That the full power transmission mode changes may also be switching, changing, or the like of the full power transmission mode. A description of full power changing is not limited in this application.

Any alternative to changing the full power transmission mode from a first mode to a second mode shall fall within the protection scope of this application, where the first mode is different from the second mode.

It should be understood that the full power transmission mode changes for a plurality of reasons, for example, the full power transmission mode may change based on pre-definition, pre-configuration, configuration, or a channel status change. The following uses power back-off as an example of a reason why the full power transmission mode changes.

S220: The terminal device sends first information to a network device based on the first state, and correspondingly, the network device receives the first information.

In other words, when the power class changes or the full power transmission mode changes, the terminal device sends the first information to the network device.

In other words, when the full power transmission mode is switched, the terminal device sends the first information to the network device, and correspondingly, the network device receives the first information.

"The power class changes" or "the full power transmission mode changes" is used as a condition for sending the first information by the terminal device to the network device.

In other words, in this application, the terminal device sends the first information to the network device only when "the power class changes" or "the full power transmission mode changes".

It should be understood that "when the power class changes" or "when the full power transmission mode changes" is merely used as a condition, and is not a limitation on time (or a moment) at which the terminal device sends the first information to the network device.

The first information is used to determine a target full power transmission mode. The target full power transmission mode is a changed full power transmission mode (full power mode). In other words, the target full power transmission mode is a transmission mode supported by the terminal device after the power class changes or the full power transmission mode changes.

For specific classification and explanation of the full power transmission mode, refer to the foregoing descriptions. Details are not described herein again.

The first information may be carried in a PHR (PHR report), or different information may be used to jointly indicate a change of the full power transmission mode. The following describes the two possible implementations in detail.

In a possible implementation 1, the first information is carried in a PHR.

It should be understood that the PHR herein is a PHR for a PUSCH, that is, a type 1 PHR. Specifically, for the PHR, refer to the foregoing descriptions. The PHR may include a PH value.

For three full power transmission modes, there may be the following three cases.

Case 1: When the full power transmission mode is a mode 0, because all antennas of the terminal device can reach maximum power in the mode 0, power corresponding to different antennas is not different and is all Pcmax. Therefore, the terminal device only needs to report the mode 0 to the network device. In other words, the first information indicates the mode 0.

Case 2: When the full power transmission mode is a mode 1, because no antennas of the terminal device can reach maximum power in the mode 1, the terminal device needs to use all the antennas to implement full power transmission. The terminal device only needs to report the mode 1 to the network device. In other words, the first information indicates the mode 1.

Case 3: When the full power transmission mode is a mode 2, because power of a part of antennas reaches Pcmax, or no power corresponding to each transmit antenna reaches Pcmax, the network device cannot learn of which antennas are used by the terminal device and which antennas are not used by the terminal device. Therefore, the terminal device needs to report, to the network device, antennas to be used and full power transmission modes corresponding to these antennas.

In this case, the first information includes the target full power transmission mode and at least one of the following: a maximum transmit antenna quantity of the terminal device, a maximum SRS port quantity supported by the terminal device on one SRS resource, a maximum stream quantity of uplink transmission supported by the terminal device, a current power class, a maximum coherent capability of uplink transmission supported by the terminal device, an SRS port combination supported by the terminal device, or a TMPI or a TPMI group number used to support full power.

The maximum transmit antenna quantity of the terminal device, the maximum SRS port quantity supported by the terminal device on one SRS resource, or the maximum stream quantity of the uplink transmission supported by the terminal device may be represented by Tx.

The current power class (power back-off is used as an example, the current power class is a power class after the power back-off, or a current power class) may be determined by using power class back-off information or power class information.

For example, the power class information indicates the current power class. For example, in capability information reported by the network device before the terminal device starts uplink transmission, a power class supported by the terminal device is the PC 1. The terminal device sends the power class information to the network device, and the power class information indicates that the current power class is a PC 1.5. Specifically, for the PC 1 and the PC 5, refer to the foregoing descriptions of the power class.

In another example, the power class back-off information indicates a power class variation. For example, in capability information reported by the network device before the terminal device starts uplink transmission, a power class supported by the terminal device is the PC 1. The terminal device sends the power class back-off information to the network device, and the power class back-off information indicates that the power class variation is 0.5. Therefore, it may be determined that the current power class is the PC 1.5.

Alternatively, the power class back-off information indicates a start and an end of a power class change. For example, the power class backs off from the PC 1 to the PC 1.5. Alternatively, the power class changes from the PC 1 to PC 1.5. Alternatively, the power class switches from the PC 1 to the PC 1.5.

A coherent capability indicates that antennas (for example, transmit antennas) of a terminal device are non-coherent (non-coherent), full-coherent (full-coherent), or partial-coherent (partial-coherent).

The maximum coherent capability of uplink transmission supported by the terminal device is a maximum coherent capability that can be supported by the terminal device after the power class changes.

For example, if the terminal device supports full-coherent (full-coherent) or partial-coherent (partial-coherent), the maximum coherent capability that can be supported by the terminal device is full-coherent.

For example, if the terminal device supports non-coherent (non-coherent) or partial-coherent (partial-coherent), the maximum coherent capability that can be supported by the terminal device is partial-coherent.

A TMPI group (group) number (or index) indicates a TMPI group, and the TMPI number (or index) indicates a TMPI, and may further indicates an actual use status of an antenna (or a port). For example, the TMPI number indicates the SRS port combination supported by the terminal device or the TMPI used to support full power.

For example, Tx is 2. Refer to Table 1. If the terminal device reports the TMPI 0, a value 1 in a 1st row of the TMPI 0 indicates that a port 1 is used, for example, is used to send data or is to be used to send data; and a value 0 in a 2nd row of the TMPI 0 indicates that a port 2 is not used.

For example, Tx is 4. Refer to Table 10. If the terminal device reports G3, it indicates that a precoding matrix included in G3 may correspond to full power transmission.

The terminal device reports the TMPI or the TMPI group, so that the network device can determine a port that is used or is to be used, to configure transmission power for the port.

To clearly understand this implementation, the following provides an example of a PHR.

Optionally, before transmitting data, the terminal device sends capability information to the network device, and the capability information includes a full power transmission mode currently supported by the terminal device. The capability information may further indicate a maximum PC supported by the terminal device on a specific band (band).

For a case in which the mode 0 is reported in the capability information (or in other words, the terminal device supports the mode 0 before the power class changes, and for similar parts below, refer to the explanation herein, and details are not described again), after power back-off occurs, the PHR includes indication information of the mode 0 (in other words, the first information indicates the mode 0).

For a case in which the mode 1 is reported in the capability information, after power back-off occurs, the PHR includes indication information of the mode 1 (in other words, the first information indicates the mode 1).

For a case in which the mode 2 is reported in the capability information, an example in which a value of Tx is 4 is used.

When transmission power respectively corresponding to the four ports in last-time transmission, or transmission power respectively configured by the network device for the four ports, or supported power reported by the four ports in the capability information is 23 dBm, the back-off information indicates to back off from the PC 1.5 to the PC 2.

In a possible case, if the power back-off causes the transmit antenna quantity to be reduced to 2, the PHR includes that Tx is 2, and the full power transmission mode is the mode 0. In other words, in this case, the transmit antenna quantity associated with a candidate full power transmission mode 0 is 2.

In another possible case, if the antenna quantity remains unchanged, the PHR includes that Tx is 4, and the full power transmission mode is the mode 2. Further, the PHR further includes indication information of G3, and G3 is a TMPI group (group) index. Specifically, for a precoding matrix indicated by G3, refer to content shown in the foregoing Table 10.

The four ports are respectively the port 1, the port 2, a port 3, and a port 4.

Optionally, ports used, after power back-off, by the terminal device to transmit data may be the port 1 and the port 3, or may be the port 1 and the port 2, or may be the port 3 and the port 3, or may be the port 1, the port 2, and the port 3. In other words, the TMPI group may indicate an SRS port combination used for transmission.

The indication information may also indicate that a TMPI G3 can support full power transmission.

When transmission power respectively corresponding to the four ports in last-time transmission (or previous transmission, or transmission before the power class changes or the full power transmission mode changes), or transmission power respectively configured by the network device for the four ports, or supported power reported by the four ports in the capability information is 23 dBm, that is, 4*23 dBm.

The power back-off information indicates back-off from the PC 1.5 to the PC 3 (in other words, the current power class is the PC 3): The PHR includes that Tx is 4 and the full power transmission mode is the mode 0.

When transmission power respectively corresponding to the four ports in last-time transmission, or transmission power respectively configured by the network device for the four ports, or supported power reported by the four ports in the capability information is 26 dBm, that is, 4*26 dBm.

The power back-off information indicates back-off from the PC 1.5 to the PC 2 or the PC 3 (in other words, the current power class is the PC 3 or the PC 2): The PHR includes that Tx is 4 and the full power transmission mode is the mode 0.

When transmission power respectively corresponding to the four ports in last-time transmission, or transmission power respectively configured by the network device for the four ports, or supported power reported by the four ports in the capability information is 26 dBm corresponding to two ports, and 23 dBm corresponding to two ports, that is, 2*23 dBm+2*26 dBm.

The power back-off information indicates back-off from the PC 1.5 to the PC 2 (in other words, the current power class is the PC 2). In a possible case, if the transmit antenna quantity is reduced to 2 due to power back-off, the PHR includes that Tx is 2 and the full power transmission mode is the mode 0.

Alternatively, the PHR includes that Tx is 2 and the full power transmission mode is the mode 2, and includes that a bitmap bitmap is 10, which is used to indicate that a 1st port of two reported ports supports full power transmission, and a 2nd port does not support full power transmission. The bitmap is used to indicate which port of the two ports supports full power transmission. For example, the bitmap "10" is a TPMI [1 0], and the 1st port, that is, the port 0, may support full power; and a bitmap "01" is a TPMI [0 1], and the 2nd port, that is, the port 1, may support full power.

The power back-off information indicates back-off from the PC 1.5 to the PC 3 (in other words, the current power class is the PC 3): The PHR includes that Tx is 4 and the full power transmission mode is the mode 0.

In conclusion, in the PHR, the terminal device includes information such as a power class, a full power transmission mode, and a transmit antenna quantity (or a port quantity) after power back-off.

Particularly, for a terminal device having a partial-coherent capability, a coherent capability may further need to be reported. For example, when there are two transmit antennas, a coherent capability of the terminal device may also change after power back-off. For example, the coherent capability of the terminal device may change from partial-coherent to non-coherent or full-coherent.

The following describes the PHR in this case in detail.

In this case, the PHR may include a Tx value, a coherent capability, a full power transmission mode, or a TMPI.

For example, for a case in which the mode 0 is reported in the capability information of the terminal device, the PHR includes indication information of the mode 0 (in other words, the first information indicates the mode 0).

For a case in which the mode 1 is reported in the capability information of the terminal device, the PHR includes indication information of the mode 1 (in other words, the first information indicates the mode 1).

For a case in which the mode 2 is reported in the capability information of the terminal device, an example in which a value of Tx is 4 is used.

When transmission power respectively corresponding to the four ports in last-time transmission, or transmission power respectively configured by the network device for the four ports, or supported power reported by the four ports in the capability information is 23 dBm, that is, 4*23 dBm.

The power back-off information indicates back-off from the PC 1.5 to the PC 2 (in other words, the current power class is the PC 2):

The PHR includes that Tx is 2, the full power transmission mode is the mode 0, and the coherent capability is non-coherent (in other words, the maximum coherent capability supported by the terminal device in this case is non-coherent).

Alternatively, the PHR includes that Tx is 2, the full power transmission mode is the mode 1, and the coherent capability is full-coherent.

Alternatively, the PHR includes that Tx is 4, the full power transmission mode is the mode 2, and the TMPI is G6. For G6, refer to the example in Table 10, and it indicates that the TPMI group G6 can support full power.

The power back-off information indicates back-off from the PC 1.5 to the PC 3:

The PHR includes that Tx is 4, and the full power transmission mode is the mode 0.

When transmission power respectively corresponding to the four ports in last-time transmission, or transmission power respectively configured by the network device for the four ports, or supported power reported by the four ports in the capability information is 26 dBm, that is, 4*26 dBm.

The power back-off information indicates back-off from the PC 1.5 to the PC 2 or the PC 3: The PHR includes that Tx is 4 and the full power transmission mode is the mode 0.

When transmission power respectively corresponding to the four ports in last-time transmission, or transmission power respectively configured by the network device for the four ports, or supported power reported by the four ports in the capability information is 26 dBm corresponding to two ports, and 23 dBm corresponding to two ports, that is, 2*23 dBm+2*26 dBm.

The power back-off information indicates back-off from the PC 1.5 to the PC 2: The PHR includes that Tx is 2 and the full power transmission mode is the mode 0.

The power back-off information indicates back-off from the PC 1.5 to the PC 3: The PHR includes that Tx is 4 and the full power transmission mode is the mode 0.

In this implementation, power back-off information, changed full power transmission mode information, and the like are carried in the PHR, so that overheads can be reduced.

In a possible implementation 2, different information may be used to jointly indicate a change of the full power transmission mode.

For example, the first information and the third information may be used to jointly indicate the change of the full power transmission mode.

The third information indicates a full power transmission mode corresponding to at least one candidate power class, the current power class belongs to the at least one candidate power class, and the at least one candidate power class is determined based on a maximum power class corresponding to a first band.

For example, the first band is a band 1, and the corresponding maximum power class is the PC 1. The band may correspond to a plurality of power classes, for example, the PC 1, the PC 1.5, the PC 2, and the PC 3.

Each power class may correspond to at least one full power transmission mode. Specifically, the full power transmission mode may be related to a transmit antenna quantity, a coherent capability, and the like.

The third information includes the full power transmission mode corresponding to the at least one candidate power class and at least one of the following:

a maximum transmit antenna quantity of the terminal device at each of the at least one candidate power class, a maximum SRS port (also referred to as port in this specification) quantity supported by the terminal device on one SRS resource at each of the at least one candidate power class, a maximum stream quantity supported by the terminal device at each of the at least one candidate power class, and a maximum coherent capability of uplink transmission supported by the terminal device at each of the at least one candidate power class, each of the at least one candidate power class, an SRS port combination supported by the terminal device at each of the at least one candidate power class, or a TMPI or a TPMI group number used to support full power at each of the at least one candidate power class.

Specifically, for content of the third information, refer to information included in the PHR in the possible implementation 1. A difference is that the third information does not include the current power class. In addition, items in the third information are for different power classes.

For example, for the PC 2, Tx is 2, and the transmission mode is a full power transmission mode 1; or Tx is 4, the transmission mode is the full power transmission mode 2, and the TMPI group index is 3 (that is, G3).

For parameters corresponding to other power classes, refer to the example in the implementation 1. Details are not described herein again.

The following uses the power back-off information as an example of indicating the current power class.

The power back-off information may be carried in the first information. Specifically, for the power back-off information, refer to the description of the power back-off information in the possible implementation 1. Details are not described herein again. In other words, in this implementation, the first information indicates the current power class.

In this way, the first information and the third information may jointly indicate (or together indicate) a changed full power transmission mode.

Optionally, the third information may be carried in the capability information in the possible implementation 1. In other words, in this implementation, the capability information includes the third information.

Alternatively, the third information may be carried in other information, or may be independently sent. This is not limited herein.

Optionally, the first information in this implementation may be carried in a PHR.

The PHR in this application may be reported by using a medium access control-control element (medium access control-control element, MAC-CE), and a reporting format of the PHR includes a single-CC format and a multi-CC format.

The terminal device may report a PHR of one antenna panel at a time, or may report PHRs of two antenna panels at a time, or the terminal device may report PHRs of more antenna panels at a time. The terminal device may report one or more PHRs by using one antenna panel, or the terminal device may jointly report or separately report a plurality of PHRs by using a plurality of antenna panels.

A PHR triggering manner in this application may include at least one of the following:

a PHR prohibit PHR timer expires, and a path loss change of at least one activated serving cell exceeds a preset value;
a periodic PHR timer expires;
a radio resource control RRC layer configures a PHR function or parameter;
any MAC entity activates a secondary cell, and a 1st activated downlink BWP is not a sleeping BWP;
a primary/secondary cell is added;
in any MAC entity, a sleeping BWP is switched to a non-sleeping BWP;
a Prohibit PHR timer expires, a MAC entity has a new uplink resource for transmission, there is PUCCH transmission in a cell, and power back-off caused by power management exceeds a preset value;
a full power mode capability of at least one activated serving cell (serving cell) changes; and
a power class of at least one activated serving cell changes, and the at least one activated serving cell is a serving cell corresponding to the terminal device.

It should be understood that the terminal device may be corresponding to a plurality of activated serving cells.

S230: The network device determines the target full power transmission mode based on the first information.

Corresponding to the possible implementation 1 in S210, the network device determines the target full power transmission mode based on content in the first information.

Corresponding to the possible implementation 2 in S210, the network device determines the target full power transmission mode based on the first information and the third information. For example, when the first information indicates that the power class after power back-off is the PC 1, and the full power transmission mode corresponding to the PC 1 included in the third information is the mode 0, the network device determines that the target full power transmission mode is the mode 0.

In a possible manner, after the terminal device completes reporting (in other words, sends the first information or sends the first information and the third information), both the network device and the terminal device perform transmission of data in a reporting mode by default.

In another possible manner, after the terminal device performs reporting, the network device further needs to deliver signaling to indicate a mode of transmission of subsequent data.

Optionally, the method may further include the following steps.

S240: The network device sends second information to the terminal device, and correspondingly, the terminal device receives the second information.

The second information indicates the full power transmission mode.

The full power transmission mode may be the target full power transmission mode reported by the terminal device to the network device.

S250: The terminal device sends data to the network device based on the second information, and correspondingly, the network device receives the data.

When the full power transmission mode indicated by the second information is the target full power transmission mode, the terminal device sends the data to the network device based on the target full power transmission mode.

In the method, the terminal device indicates, to the network device, a channel status change, for example, a target full power transmission mode after power back-off, so that the network device learns of the channel status change in a timely manner, and further determines a transmission mode based on an updated channel status, a capability of the terminal device, or the like, or determines uplink transmission power. This helps improve communication performance and improve user experience.

It should be understood that the technical solutions in this application may be applied to a panel (panel) or a beam (beam). This is not specifically limited in this application.

It should be further understood that in this application, 4Tx or 2Tx is used as an example to describe the solution. However, this application is not limited thereto. For example, the technical solutions of this application are applicable to scheduling of transmission power of 8Tx or possibly more antennas (ports) in the future, which shall fall within the protection scope of this application.

The foregoing describes in detail the power control method provided in this application. The following describes a communication apparatus provided in this application.

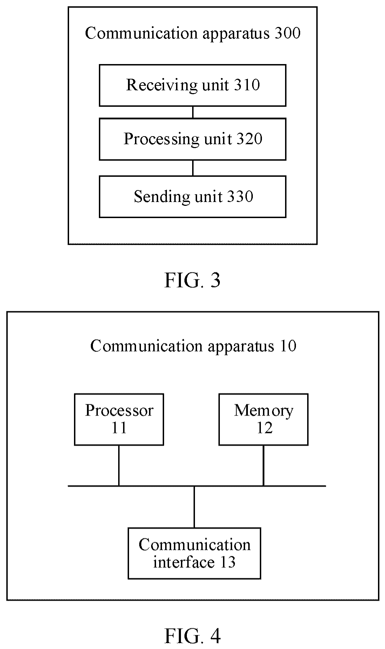

FIG. 3 is a block diagram of a communication apparatus 300 according to this application.

In a possible design, the communication apparatus 300 includes a receiving unit 330, a processing unit 320, and a sending unit 310. The communication apparatus 300 may implement the steps or procedures that are performed by the terminal device in the foregoing method embodiment. For example, the communication apparatus 300 may be a terminal device, or may be a chip or a circuit in a configuration terminal device. The receiving unit 330 is configured to perform a receiving-related operation of the terminal device in the foregoing method embodiment, and the processing unit 320 is configured to perform a processing-related operation of the terminal device in the foregoing method embodiment.

In a possible manner, the sending unit 310 is configured to send capability information, where the capability information may indicate a highest PC of the terminal device on a specific band (band).

Alternatively, the capability information may indicate a PC that is currently supported by the terminal device.

Alternatively, the capability information may indicate a transmission mode that can be supported by the terminal device. The transmission mode may determine transmission power supported by each antenna.

In another possible manner, the sending unit 310 is configured to send first information, where the first information is used to determine a target full power transmission mode.

The first information includes the target full power transmission mode and at least one of the following:

a maximum transmit antenna quantity of the terminal device;
a maximum SRS port quantity supported by the terminal device on one SRS resource;
a maximum stream quantity of uplink transmission supported by the terminal device;
a current power class;
a maximum coherent capability of uplink transmission supported by the terminal device; and
an SRS port combination supported by the terminal device or a TMPI or a TPMI group number used to support full power.

Alternatively, the first information indicates a power class.

In a possible manner, the sending unit 310 is configured to send third information, where the third information includes a full power transmission mode corresponding to at least one candidate power class and at least one of the following:

a maximum transmit antenna quantity of the terminal device at each of the at least one candidate power class;
a maximum SRS port quantity supported by the terminal device on one SRS resource at each of the at least one candidate power class;
a maximum stream quantity supported by the terminal device at each of the at least one candidate power class;
a maximum coherent capability of uplink transmission supported by the terminal device at each of the at least one candidate power class;
each of the at least one candidate power class; and
an SRS port combination supported by the terminal device at each of the at least one candidate power class, or a TMPI or a TPMI group number used to support full power at each of the at least one candidate power class.

In a possible manner, the receiving unit 330 is configured to receive second information, where the second information indicates a full power transmission mode.

In a possible manner, the processing unit 320 is configured to determine transmission power based on the second information.

In a possible manner, the sending unit 310 is configured to send data based on the transmission power, for example, send data to a network device.

In a possible manner, the processing unit 320 is configured to determine whether to trigger a PHR.

For example, when at least one of the following conditions is met, the processing unit 320 is configured to determine to trigger a PHR:

a PHR prohibit PHR timer expires, and a path loss change of at least one activated serving cell exceeds a preset value;
a periodic PHR timer expires;
a radio resource control RRC layer configures a PHR function or parameter;
any MAC entity activates a secondary cell, and a $1^{st}$ activated downlink BWP is not a sleeping BWP;
a primary/secondary cell is added;
in any MAC entity, a sleeping BWP is switched to a non-sleeping BWP;
a Prohibit PHR timer expires, a MAC entity has a new uplink resource for transmission, there is PUCCH transmission in a cell, and power back-off caused by power management exceeds a preset value;
a full power mode capability of at least one activated serving cell (serving cell) changes; and
a power class of at least one activated serving cell changes, and the at least one activated serving cell is a serving cell corresponding to the terminal device.

Optionally, the sending unit 310 and the receiving unit 330 may alternatively be integrated into one transceiver unit that has both a receiving function and a sending function. This is not limited herein.

Optionally, in an implementation in which the communication apparatus 300 may be the terminal device in the method embodiment, the sending unit 310 may be a transmitter, and the receiving unit 330 may be a receiver. The receiver and the transmitter may alternatively be integrated into a transceiver. The processing unit 320 may be a processing apparatus.

Optionally, in an implementation in which the communication apparatus 300 may be a chip or an integrated circuit installed in a terminal device, the sending unit 310 and the receiving unit 330 may be communication interfaces or interface circuits. For example, the sending unit 310 is an output interface or an output circuit, the receiving unit 330 is an input interface or an input circuit, and the processing unit 320 may be a processing apparatus.

A function of the processing apparatus may be implemented by hardware, or may be implemented by hardware executing corresponding software. For example, the processing apparatus may include a memory and a processor. The memory is configured to store a computer program, and the processor reads and executes the computer program stored in the memory, to enable the communication apparatus 300 to perform operations and/or processing performed by the terminal device in the method embodiment. Optionally, the processing apparatus may include only a processor, and the memory configured to store the computer program is located outside the processing apparatus. The processor is connected to the memory through a circuit/wire, to read and execute the computer program stored in the memory. For another example, the processing apparatus may be a chip or an integrated circuit.

In another possible design, the communication apparatus 300 may implement the steps or procedures performed by the network device in the foregoing method embodiment. For example, the communication apparatus 300 may be a network device, or may be a chip or a circuit in a configuration network device. The receiving unit 330 is configured to perform a receiving-related operation of the network device in the foregoing method embodiment, and the processing unit 320 is configured to perform a processing-related operation of the network device in the foregoing method embodiment.

In a possible manner, the receiving unit 330 is configured to receive first information, where the first information includes the target full power transmission mode and at least one of the following:
a maximum transmit antenna quantity of the terminal device, a maximum SRS port quantity supported by the terminal device on one channel sounding reference signal SRS resource, a maximum stream quantity of uplink transmission supported by the terminal device, a current power class, a maximum coherent capability of uplink transmission supported by the terminal device, an SRS port combination supported by the terminal device, or a TMPI or a TPMI group number used to support full power.

In a possible manner, the processing unit 320 determines the target full power transmission mode based on the first information.

In a possible manner, the receiving unit 330 is configured to receive the first information, where the first information includes the current power class.

In a possible manner, the receiving unit 330 is configured to receive third information, where the third information includes a full power transmission mode corresponding to at least one candidate power class and at least one of the following:

a maximum transmit antenna quantity of the terminal device at each of the at least one candidate power class;
a maximum SRS port quantity supported by the terminal device on one SRS resource at each of the at least one candidate power class;
a maximum stream quantity supported by the terminal device at each of the at least one candidate power class;
a maximum coherent capability of uplink transmission supported by the terminal device at each of the at least one candidate power class;
each of the at least one candidate power class; and
an SRS port combination supported by the terminal device at each of the at least one candidate power class, or a transmit precoding matrix TMPI or a TPMI group number used to support full power at each of the at least one candidate power class.

In a possible manner, the processing unit 320 is configured to determine the target full power transmission mode based on the first information and the third information.

In a possible manner, the sending unit 310 is configured to send second information, where the second information indicates a full power transmission mode.

In a possible manner, the processing unit 320 is further configured to determine uplink transmission power. For example, the processing unit 320 determines the uplink transmission power based on a target power transmission mode.

Optionally, the sending unit 310 and the receiving unit 330 may alternatively be integrated into one transceiver unit that has both a receiving function and a sending function. This is not limited herein.

Optionally, in an implementation in which the communication apparatus 300 may be the network device in the method embodiment, the sending unit 310 may be a transmitter, and the receiving unit 330 may be a receiver. The receiver and the transmitter may alternatively be integrated into a transceiver. The processing unit 320 may be a processing apparatus.

Optionally, in an implementation in which the communication apparatus 300 may be a chip or an integrated circuit installed in a network device, the sending unit 310 and the receiving unit 330 may be communication interfaces or interface circuits. For example, the sending unit 310 is an output interface or an output circuit, the receiving unit 330 is an input interface or an input circuit, and the processing unit 320 may be a processing apparatus.

A function of the processing apparatus may be implemented by hardware, or may be implemented by hardware executing corresponding software. For example, the processing apparatus may include a memory and a processor. The memory is configured to store a computer program, and the processor reads and executes the computer program stored in the memory, to enable the communication apparatus 300 to perform operations and/or processing performed by the network device in the method embodiment. Optionally, the processing apparatus may include only a processor, and the memory configured to store the computer program is located outside the processing apparatus. The processor is connected to the memory through a circuit/wire, to read and execute the computer program stored in the memory. For another example, the processing apparatus may be a chip or an integrated circuit.

For a more detailed description about the foregoing communication apparatus, directly refer to the related description in the method embodiment shown in FIG. 2. Details are not described herein again.

As shown in FIG. 4, an embodiment of this application provides another power control apparatus 10. The apparatus 10 includes a processor 11, the processor 11 is coupled to a memory 12, the memory 12 is configured to store a computer program or instructions and/or data, and the processor 11 is configured to: execute the computer program or the instructions stored in the memory 12, or read the data stored in the memory 12, to perform the method in the foregoing method embodiments.

Optionally, there are one or more processors 11.

Optionally, there are one or more memories 12.

Optionally, the memory 12 and the processor 11 are integrated together, or are disposed separately.

Optionally, as shown in FIG. 4, the apparatus 10 further includes a transceiver 13, and the transceiver 13 is configured to: receive and/or send a signal. For example, the processor 11 is configured to control the transceiver 13 to receive and/or send a signal.

In a solution, the apparatus 10 is configured to implement operations performed by the terminal device in the foregoing method embodiments.

For example, the processor 11 is configured to execute the computer program or the instructions stored in the memory 12, to implement related operations of the terminal device in the foregoing method embodiments.

For another example, the processor 11 is configured to execute the computer program or the instructions stored in the memory 12, to implement related operations of the network device in the foregoing method embodiments.

It should be understood that the processor in embodiments of this application may be an integrated circuit chip, and has a signal processing capability. In an implementation process, the steps in the foregoing method embodiments can be implemented by using a hardware integrated logical circuit in the processor, or by using instructions in a form of software. The processor may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA), another programmable logic device, a discrete gate or a transistor logic device, a discrete hardware component, or the like. The general-purpose processor may be a microprocessor, or the processor may be any conventional processor or the like. The steps of the methods disclosed in embodiments of this application may be directly presented as being performed and completed by a hardware encoding processor, or performed and completed by a combination of hardware and a software module in an encoding processor. The software module may be located in a mature storage medium in the art, for example, a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

The memory in embodiments of this application may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. Through example but not limitative description, RAMs in many forms are available, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DRRAM).

It should be noted that, when the processor is a general-purpose processor, a DSP, an ASIC, an FPGA or another programmable logic device, a discrete gate or a transistor logic device, or a discrete hardware component, the memory (storage module) may be integrated into the processor.

It should be further noted that, the memory described in this specification is intended to include, but is not limited to, these memories and any memory of another proper type.

In addition, this application further provides a computer-readable storage medium. The computer-readable storage medium stores computer instructions, and when the computer instructions are run on a computer, operations and/or procedures performed by the terminal device or the network device in the method embodiments of this application are performed.

This application further provides a computer program product. The computer program product includes computer program code or instructions. When the computer program code or the instructions are run on a computer, operations and/or procedures performed by the terminal device or the network device in the method embodiments of this application are performed.

In addition, this application further provides a chip, and the chip includes a processor. A memory configured to store a computer program is disposed independent of the chip. The processor is configured to execute the computer program stored in the memory, so that an operation and/or processing performed by the terminal device or the network device in any method embodiment are/is performed.

Further, the chip may include a communication interface. The communication interface may be an input/output interface, an interface circuit, or the like. Further, the chip may include the memory.

In addition, this application further provides a communication system. The communication system includes the terminal device and the network device in embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

The term "and/or" in this application is merely an association relationship for describing associated objects, and indicates that three relationships may exist. For example, A and/or B may indicate the following three cases: Only A exists, both A and B exist, and only B exists. Herein, A, B, and C each may be in a singular form or a plural form. This is not limited.

When the functions are implemented in the form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The computer software product is stored in a storage medium, and includes several instructions for instructing a computing device (which may be a personal computer, a server, or a network device) to perform all or a part of the steps of the methods described in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1.  A power control method, comprising:

    determining a first state, wherein the first state is that a power class changes or a full power transmission mode changes; and
    sending first information based on the first state, wherein the first information is used to determine a target full power transmission mode, and the target full power transmission mode is a transmission mode supported by a terminal device after the power class changes or the full power transmission mode changes.

2.  The method according to claim 1, wherein
    the first information is carried in a power headroom report PHR, and the PHR indicates power that remains after the terminal device completes current transmission.

3.  The method according to claim 1 or 2, wherein the first information comprises the target full power transmission mode and at least one of the following:
    a maximum transmit antenna quantity of the terminal device, a maximum SRS port quantity supported by the terminal device on one channel sounding reference signal SRS resource, a maximum stream quantity of uplink transmission supported by the terminal device, a current power class, a maximum coherent capability of uplink transmission supported by the terminal device, an SRS port combination supported by the terminal device, or a transmit precoding matrix indicator TMPI or a TPMI group number used to support full power.

4.  The method according to any one of claims 1 to 3, wherein the PHR is triggered based on at least one of the following:

    a full power mode capability of at least one activated serving cell changes; and
    a power class of at least one activated serving cell changes, and the at least one activated serving cell is a serving cell corresponding to the terminal device.

5.  The method according to claim 1, wherein the first information indicates a current power class, and the method further comprises:
sending third information, wherein the third information indicates a full power transmission mode corresponding to at least one candidate power class, the current power class belongs to the at least one candidate power class, and the at least one candidate power class is determined based on a maximum power class corresponding to a first band.

6. The method according to claim 5, wherein the third information comprises the full power transmission mode corresponding to the at least one candidate power class and at least one of the following:
a maximum transmit antenna quantity of the terminal device at each of the at least one candidate power class, a maximum SRS port quantity supported by the terminal device on one SRS resource at each of the at least one candidate power class, a maximum stream quantity supported by the terminal device at each of the at least one candidate power class, and a maximum coherent capability of uplink transmission supported by the terminal device at each of the at least one candidate power class, each of the at least one candidate power class, an SRS port combination supported by the terminal device at each of the at least one candidate power class, or a transmit precoding matrix TMPI or a TPMI group number used to support full power at each of the at least one candidate power class.

7. A power control method, comprising:

   receiving first information; and
   determining a target full power transmission mode based on the first information, wherein the target full power transmission mode is a transmission mode supported by a terminal device after the power class changes or a full power transmission mode changes, and the target full power transmission mode is used for data transmission.

8. The method according to claim 7, wherein the first information is carried in a power headroom report PHR, and the PHR indicates power that remains after the terminal device completes current transmission.

9. The method according to claim 8, wherein the first information comprises the target full power transmission mode and at least one of the following:
a maximum transmit antenna quantity of the terminal device, a maximum SRS port quantity supported by the terminal device on one SRS resource, a maximum stream quantity of uplink transmission supported by the terminal device, current power class information, a maximum coherent capability of uplink transmission supported by the terminal device, an SRS port combination supported by the terminal device, or a TMPI or a TPMI group number used to support full power.

10. The method according to any one of claims 7 to 9, wherein the PHR is triggered based on at least one of the following:

    a full power mode capability of at least one activated serving cell changes; and
    a power class of at least one activated serving cell changes, and the at least one activated serving cell is a serving cell corresponding to the terminal device.

11. The method according to claim 7, wherein the first information indicates a current power class, and the method further comprises:

    receiving third information, wherein the third information indicates a full power transmission mode corresponding to at least one candidate power class, the current power class belongs to the at least one candidate power class, and the at least one candidate power class is determined based on a maximum power class corresponding to a first band; and
    determining the target full power transmission mode based on the first information and the third information.

12. The method according to claim 11, wherein the third information comprises the full power transmission mode corresponding to the at least one candidate power class and at least one of the following:
a maximum transmit antenna quantity of the terminal device at each of the at least one candidate power class, a maximum SRS port quantity supported by the terminal device on one SRS resource at each of the at least one candidate power class, a maximum stream quantity supported by the terminal device at each of the at least one candidate power class, a maximum coherent capability of uplink transmission supported by the terminal device at each of the at least one candidate power class, each of the at least one candidate power class, an SRS port combination supported by the terminal device at each of the at least one candidate power class, or a TMPI or a TPMI group number used to support full power at each of the at least one candidate power class.

**13.** A communication apparatus, comprising a processing unit and a transceiver unit, wherein

the processing unit is configured to determine a first state, wherein the first state is that a power class changes or a full power transmission mode changes; and

the transceiver unit is configured to send first information, wherein the first information is used to determine a target full power transmission mode, the target full power transmission mode is a transmission mode supported by a terminal device after the power class changes or the full power transmission mode changes, and the first information is sent based on the first state.

**14.** The apparatus according to claim 13, wherein the first information is carried in a PHR, and the PHR indicates power that remains after the terminal device completes current transmission.

**15.** The apparatus according to claim 13 or 14, wherein the first information comprises the target full power transmission mode and at least one of the following:
a maximum transmit antenna quantity of the terminal device, a maximum SRS port quantity supported by the terminal device on one SRS resource, a maximum stream quantity of uplink transmission supported by the terminal device, a current power class, a maximum coherent capability of uplink transmission supported by the terminal device, an SRS port combination supported by the terminal device, or a TMPI or a TPMI group number used to support full power.

**16.** The apparatus according to claims 13 to 15, wherein the PHR is triggered based on at least one of the following:

a full power mode capability of at least one activated serving cell changes; and

a power class of at least one activated serving cell changes, and the at least one activated serving cell is a serving cell corresponding to the terminal device.

**17.** The apparatus according to claim 16, wherein the first information indicates the current power class, and the method further comprises:
sending third information, wherein the third information indicates a full power transmission mode corresponding to at least one candidate power class, the current power class belongs to the at least one candidate power class, and the at least one candidate power class is determined based on a maximum power class corresponding to a first band.

**18.** The apparatus according to claim 17, wherein the third information comprises the full power transmission mode corresponding to the at least one candidate power class and at least one of the following:
a maximum transmit antenna quantity of the terminal device at each of the at least one candidate power class, a maximum SRS port quantity supported by the terminal device on one SRS resource at each of the at least one candidate power class, a maximum stream quantity supported by the terminal device at each of the at least one candidate power class, a maximum coherent capability of uplink transmission supported by the terminal device at each of the at least one candidate power class, each of the at least one candidate power class, an SRS port combination supported by the terminal device at each of the at least one candidate power class, or a TMPI or a TPMI group number used to support full power at each of the at least one candidate power class.

**19.** A communication apparatus, comprising a processing unit and a transceiver unit, wherein

the transceiver unit is configured to receive first information; and

the processing unit is configured to determine a target full power transmission mode based on the first information, wherein the target full power transmission mode is a transmission mode supported by a terminal device after the power class changes or a full power transmission mode changes, and the target full power transmission mode is used for data transmission.

**20.** The apparatus according to claim 19, wherein the first information is carried in a PHR, and the PHR indicates power that remains after the terminal device completes current transmission.

**21.** The apparatus according to claim 20, wherein the first information comprises the target full power transmission mode and at least one of the following:
a maximum transmit antenna quantity of the terminal device, a maximum SRS port quantity supported by the terminal device on one SRS resource, a maximum stream quantity of uplink transmission supported by the terminal device, a current power class, a maximum coherent capability of uplink transmission supported by the terminal device, an SRS port combination supported by the terminal device, or a TMPI or a TPMI group number used to support full power.

22. The apparatus according to claims 19 to 21, wherein the PHR is triggered based on at least one of the following:

a full power mode capability of at least one activated serving cell changes; and
a power class of at least one activated serving cell changes, and the at least one activated serving cell is a serving cell corresponding to the terminal device.

23. The apparatus according to claim 22, wherein the first information indicates the current power class;

the transceiver unit is further configured to receive third information, wherein the third information indicates a full power transmission mode corresponding to at least one candidate power class, the current power class belongs to the at least one candidate power class, and the at least one candidate power class is determined based on a maximum power class corresponding to a first band; and
the processing unit is configured to determine the target full power transmission mode based on the first information and the third information.

24. The apparatus according to claim 23, wherein the third information comprises the full power transmission mode corresponding to the at least one candidate power class and at least one of the following:
a maximum transmit antenna quantity of the terminal device at each of the at least one candidate power class, a maximum SRS port quantity supported by the terminal device on one SRS resource at each of the at least one candidate power class, a maximum stream quantity supported by the terminal device at each of the at least one candidate power class, a maximum coherent capability of uplink transmission supported by the terminal device at each of the at least one candidate power class, each of the at least one candidate power class, an SRS port combination supported by the terminal device at each of the at least one candidate power class, or a TMPI or a TPMI group number used to support full power at each of the at least one candidate power class.

25. A communication apparatus, comprising at least one processor, wherein the at least one processor is coupled to at least one memory, and the at least one processor is configured to execute a computer program or instructions stored in the at least one memory, to enable the communication apparatus to perform the method according to any one of claims 1 to 6 or claims 7 to 12.

26. A computer-readable storage medium, wherein the computer-readable storage medium stores computer instructions, and when the computer instructions are run on a computer, the method according to any one of claims 1 to 6 or claims 7 to 12 is performed.

27. A computer program product, wherein the computer program product comprises computer program code, and when the computer program code is run on a computer, the method according to any one of claims 1 to 6 or claims 7 to 12 is performed.

28. A communication system, wherein the communication system comprises at least one communication apparatus according to any one of claims 13 to 18 and/or any one of claims 19 to 24.

FIG. 1

FIG. 2

Communication apparatus 300

Receiving unit 310

Processing unit 320

Sending unit 330

FIG. 3

Communication apparatus 10

Processor
11

Memory
12

Communication
interface 13

FIG. 4

## INTERNATIONAL SEARCH REPORT

<table>
<tr><td colspan="2"></td><td>International application No.<br><br>**PCT/CN2024/079554**</td></tr>
</table>

**A. CLASSIFICATION OF SUBJECT MATTER**

H04W 52/18(2009.01)i

According to International Patent Classification (IPC) or to both national classification and IPC

**B. FIELDS SEARCHED**

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNABS: CNTXT; CNKI; VEN; WOTXT; USTXT; EPTXT; 3GPP: 功率等级, 变化, 改变, 回退, 更改, 满功率, 全功率, 模式, 报告, 上报, 目标, 更新, power class, change, reduction, fallback, full power, mode, report, target, update

**C. DOCUMENTS CONSIDERED TO BE RELEVANT**

| Category* | Citation of document, with indication, where appropriate, of the relevant passages | Relevant to claim No. |
|---|---|---|
| PX | CN 117204060 A (BEIJING XIAOMI MOBILE SOFTWARE CO., LTD.) 08 December 2023 (2023-12-08)<br>description, paragraphs [0031]-[0339] | 1, 2, 7, 8, 13, 14, 19, 20, 25-28 |
| X | CN 114978247 A (HUAWEI TECHNOLOGIES CO., LTD.) 30 August 2022 (2022-08-30)<br>description, paragraphs [0203]-[0559] | 1-28 |
| A | CN 110720241 A (GUANGDONG OPPO MOBILE TELECOMMUNICATIONS CORP., LTD.) 21 January 2020 (2020-01-21)<br>entire document | 1-28 |
| A | CN 113472407 A (VIVO MOBILE COMMUNICATION CO., LTD.) 01 October 2021 (2021-10-01)<br>entire document | 1-28 |
| A | WO 2021023013 A1 (VIVO MOBILE COMMUNICATION CO., LTD.) 11 February 2021 (2021-02-11)<br>entire document | 1-28 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **21 May 2024** | **01 June 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

| Patent document cited in search report | | | Publication date (day/month/year) | Patent family member(s) | Publication date (day/month/year) |
|---|---|---|---|---|---|
| CN | 117204060 | A | 08 December 2023 | None | |
| CN | 114978247 | A | 30 August 2022 | None | |
| CN | 110720241 | A | 21 January 2020 | None | |
| CN | 113472407 | A | 01 October 2021 | None | |
| WO | 2021023013 | A1 | 11 February 2021 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310242364X